(19) **Europäisches Patentamt
European Patent Office
Office européen des brevets**

(11) **EP 4 172 581 B1**

(12) **EUROPEAN PATENT SPECIFICATION**

(45) Date of publication and mention
of the grant of the patent:
**20.08.2025 Bulletin 2025/34**

(21) Application number: **21736735.8**

(22) Date of filing: **25.06.2021**

(51) International Patent Classification (IPC):
**G01K 1/14** *(2021.01)* **G01K 7/42** *(2006.01)*
**G01K 13/00** *(2021.01)* **G05D 23/20** *(2006.01)*

(52) Cooperative Patent Classification (CPC):
**G01K 7/427; G05D 23/1917**

(86) International application number:
**PCT/IB2021/055637**

(87) International publication number:
**WO 2021/260634 (30.12.2021 Gazette 2021/52)**

(54) **CURRENT LOAD MANAGEMENT FOR TEMPERATURE CONTROL IN A CABLE DUCT**

**STROMLASTVERWALTUNG ZUR TEMPERATURREGELUNG IN EINEM KABELKANAL**

**GESTION DE CHARGE DE COURANT POUR RÉGULATION DE TEMPÉRATURE DANS UN CONDUIT DE CÂBLE**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.06.2020 US 202063043984 P**

(43) Date of publication of application:
**03.05.2023 Bulletin 2023/18**

(73) Proprietor: **SCHEMMANN, Marcel
6105 BN Maria Hoop (NL)**

(72) Inventor: **SCHEMMANN, Marcel
6105 BN Maria Hoop (NL)**

(74) Representative: **Studio Torta S.p.A.
Via Viotti, 9
10121 Torino (IT)**

(56) References cited:
**WO-A1-2018/217476     WO-A2-2010/053542
US-A1- 2019 155 347**

**Description**

BACKGROUND

Electrical power cables heat up when they have to support a significant current. In order to keep this self-heating within safe limits, cables are dimensioned with sufficient conductor area to keep the amount of self-heating under control for a given current limit. The current in the cables may in some instances be gated using fuses that limit current to a conservative, maximum value. This results in larger than necessary conductor areas in cables, increasing the weight, size and cost of cabling. This problem is exacerbated in an economy that is progressively becoming more reliant on electrical energy sources and storage as compared to energy generated directly from fossil fuels.

In order to use cables at currents exceeding those determined by conservative current ratings, temperature sensors to measure cable operating temperature may be installed. One method involves including a glass fiber in a cable or a conductor. Fiber-optic readout methods are applied to measure the glass temperature along the length of the fiber. As a result, a temperature profile along the cable is monitored and the cable can safely be operated at higher current values, for instance up to 30% more current may be tolerated. An example of such a system is described in WO 2010/053542 A2. This document discloses a system and a method that use both static and transient modelling of power cables coupled with real time measurements of distributed temperature profiles of both the cable and its immediate environment to optimize the current loads of the power cable. Optical fibers are integrated into the monitored power cables and are used for measuring distributed temperature profiles.

Cable heat dissipation is proportional to $R*I^2$, with R the cable resistance and I the cable current. A 30% increase in current capacity thus results in up to 70% extra dissipation, or conversely, for a given dissipation, the cable resistance may be 70% higher, meaning conductor volume (and thus, weight, cost, size etc.) may be significantly reduced. The conductor volume may be reduced by up to 40% when using cable monitoring, a significant reduction. Cable temperature monitoring is thus a field of growing interest.

BRIEF DESCRIPTION OF THE SEVERAL VIEWS OF THE DRAWINGS

To easily identify the discussion of any particular element or act, the most significant digit or digits in a reference number refer to the figure number in which that element is first introduced.

FIG. 1 depicts a cable monitoring system 100 in accordance with one embodiment.
FIG. 2 depicts an exemplary control current waveform 200.
FIG. 3 depicts an exemplary cable and duct temperature response to control current.
FIG. 4 depicts an exemplary cable and duct temperature response to cable current.
FIG. 5 illustrates a multi-cable model 500 in accordance with one embodiment.
FIG. 6 depicts exemplary control current settings for a double cable system.
FIG. 7 depicts exemplary cable temperature responses to cable current in a dual-cable system.
FIG. 8 depicts exemplary cable currents in a temperature-controlled multi-cable system with three low current cables and one high current cable.
FIG. 9 depicts exemplary unstable current behavior in a temperature-controlled multi-cable system with three low current cables and one high current cable.
FIG. 10 depicts a cable temperature control system in accordance with one embodiment.
FIG. 11 depicts a cable temperature control system in accordance with another embodiment.
FIG. 12 depicts a cable temperature control system in accordance with yet another embodiment.
FIG. 13 depicts a cable temperature control system in accordance with yet another embodiment.
FIG. 14 depicts a process in accordance with one embodiment.
FIG. 15 depicts a process in accordance with one embodiment.
FIG. 16 depicts exemplary temperature responses by cables 2 and 3 and by a duct to a current impulse on cable 1.
FIG. 17 depicts a two pole RC network to model thermal response on cables in ductwork, in accordance with one embodiment.
FIG. 18 depicts an example of the thermal response of a cable in a duct.
FIG. 19 depicts a cable current to temperature model that accounts for changes to cable resistance R due to temperature T, in accordance with one embodiment.
FIG. 20 depicts exemplary plots for a cable temperature transfer function to other cables and to ductwork.
FIG. 21 depicts a process in accordance with one embodiment.
FIG. 22 depicts a process in accordance with one embodiment.
FIG. 23 depicts an exemplary cable and duct temperature response to excitation of a cable.
FIG. 24 depicts a process in accordance with one embodiment.

FIG. 25 illustrates a client server network configuration 2500 in accordance with one embodiment.

FIG. 26 is a diagrammatic representation depicting a machine 2600 in the form of a computer system within which a set of instructions may be executed for causing the machine to perform any one or more of the methodologies discussed herein, according to an example embodiment.

DETAILED DESCRIPTION

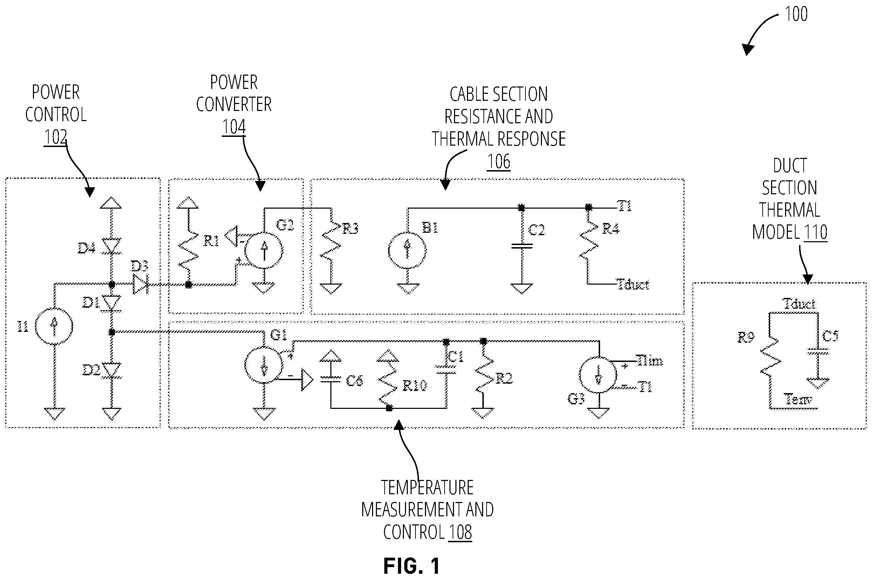

A simplified exemplary model of a cable monitoring system 100 for a cable in a duct is depicted in FIG. 1. The model performs a simulation of cable current and temperature after a cable current is turned on. The model comprises a number of blocks: power control 102, power converter 104, cable section resistance and thermal response 106, temperature measurement and control 108, and the duct section thermal model 110. A limit temperature is represented by voltage $T_{lim}$ and an environment temperature represented by a voltage $T_{env}$.

In the depiction in FIG. 1, electrical resistance, thermal resistance and control loop gain factors are modeled as resistors. Time constants are modeled as RC pairs with an RC time equal to the time constant of interest for the cable thermal time constant (components R4, C6) and for the main time constant in the control loop (components R2, C1).

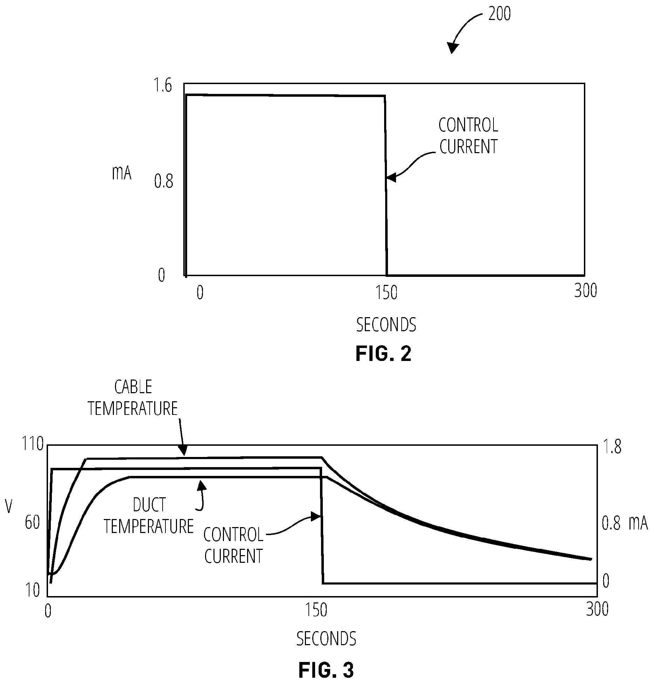

The control current waveform 200 depicted in FIG. 2 depicts a control current to the power converter 104 via D3. The gain G2 in the current converter may for example be configured to 1000, so that the current step of 1.5 mA produced by source I1 results in a cable current request of 1.5 A. The current request starts at 1 second and ends at 150 seconds. In the depicted example the diode D3 only enables an output (positive) current request from the power converter 104. This is not a fundamental limitation; power converters may provide AC currents or bi-directional DC currents to deliver and/or receive energy. This constraint is provided to simplify the example such that a simple diode network (D1..D4) may be used to illustrate the effect of a generally more complicated implementation.

In general a cable is monitored at many points along the cable length, and the temperature measurement and control 108 may act on a worst case temperature or on a weighted function of local cable temperatures that includes an integration of thermal or other wear or degradation effects of the cable over time to determine if cable temperature reduction is needed or not. For simplicity of explanation this is not included in the example provided.

Diode D1 enables the temperature measurement and control 108 (connected at the node between D1 and diode D2) to subtract current from the control current I1 in case it is detected that the cable temperature is rising too high. As long as the cable temperature is below the limit setting, the temperature measurement and control 108 operates to increase cable current by injecting a positive current, however this injected current is dumped at D2, and therefor does not affect the actual cable current. If the cable temperature exceeds the temperature limit setting, the temperature measurement and control 108 pulls a current out through D1 such that the control current to the power converter 104 (via diode D3) is reduced. If the temperature measurement and control 108 pulls more current than the requested control current from I1, the control current to the power converter 104 via D3 goes to zero and the excess current is provided to the temperature measurement and control 108 via diode D4.

The power converter 104 may for example be a 1000x current amplifier. The input current is converted to a voltage, with R1 for example having a value of 1 Ohm (1V/A), and then amplified with a controlled current source with a gain factor of 1000 A/V, resulting in an overall current gain of 1000.

The output current from the power converter 104 is provided to the cable. A section of cable is modeled by the cable section resistance and thermal response 106, by resistor R3 through which flows a current $I_{R3}$. The thermal dissipation in that cable section due to conductive losses, in Watts, is:

$$P = R3 * I_{R3}^2$$

The thermal response of the cable in response to a step in the cable current, relative to a constant duct temperature $T_{duct}$, is given by:

$$\Delta T\left(t\right) = P * R_{th1} * \left(1 - e^{\frac{-t}{\tau}}\right)$$

where $R_{th1}$ is the thermal resistance of the cable section and $\tau = R_{th1} * C1$.

More generally, the cable current may comprise a more complex profile, the duct temperature may not be fixed, and cable conductor resistivity may be temperature dependent (e.g., increases with temperature), further complicating the model. Such complications are omitted here for simplicity.

In general, the cable is installed in a duct or some other construction. The cable is of a tight construction with good thermal contact between its components. The cable may be tied or otherwise fixed to the duct. The duct is of larger construction than the cable, often with few points of contact to the environment. Such points may for instance be duct supports into relatively poor thermal conductors such as porous stone or other materials. Also, ducts may be enclosed in narrow tunnels with poor ventilation such that there is little air cooling. As a consequence, a duct may have relatively large thermal resistance to the environment, but at the same time due to their size, ducts may have large thermal mass compared to a cable in a duct. This combination can give a duct a long thermal time constant combined with relatively high thermal resistance. See the duct section thermal model 110 depicted in FIG. 1, where $T_{env}$ is the environmental temperature around the duct.

The power flowing into the duct may be simplified to be the power dissipated by the cable. The duct thermal response to a step in dissipation P is then:

$$\Delta T\left(t\right) = P * R_{thd} * \left(1 - e^{\frac{-t}{\tau}}\right)$$

where the thermal time constant $\tau_d$ is determined by $R_{thd}$ and $C_d$ in the same manner as for the cable.

The temperature of the cable section is monitored resulting in a temperature reading T1. The method of monitoring may be performed in manners known in the art, for instance utilizing a fiber temperature monitoring system reporting a temperature. This temperature is compared to a limit temperature setting $T_{lim}$ and the difference is converted to a current by a current source with gain G3. That current is extracted from a loop feedback filter comprising R2, C1, R10, and C6. The output of the loop filter drives a current source with gain G1 (e.g., 1/1000 A/V to have an output scaled back from A to mA, compatible with the power control 102) that pulls the current out of the power control 102 (between diodes D1 and D2). In the temperature measurement and control 108 depicted in FIG. 1, the main time constant of the loop filter is set by R2 and C1.

The control loop feedback filter components C6 and R10 add poles and zeros that improve the control behavior. Many different implementations of control loops are possible; the one depicted is just one example to explain the concept. The control loop gain setting is configured to have an approximately correct loop gain at or in the range of the normally requested (typical operating range or value) cable current where the temperature control is designed to operate. In this control loop a temperature difference is linearly converted to a cable current response whereas the cable temperature response has a quadratic relation to cable current. Thus the control loop is fundamentally non-linear, but by linearizing the cable temperature response to cable current around the requested cable current, the equations become approximately linearized around that point. In general, a system need not operate this way; instead of directly controlling current delivered to a cable, a temperature control system may also control power dissipated in the cable by controlling the square of the current. Then the control system equations are mostly linear (apart from for instance cable conductivity dependence on temperature). For simplicity this scenario is not incorporated in the example, but a cable temperature control loop that controls the square of the cable current may be implemented in one embodiment. The control current and cable and duct temperature response depicted in FIG. 3 shows the requested current from the control source I1 and the cable and duct temperature responses for the example presented here.

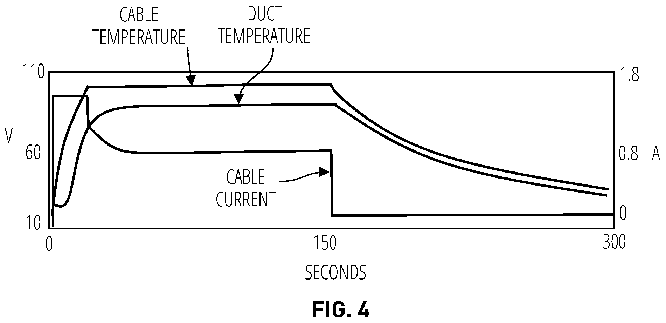

With reference to the exemplary cable current and cable and duct temperature graph depicted in FIG. 4, the current turns on at 1 second, the control signal is 1.5 mA (right hand axis for cable current) meaning that 1.5 A of cable current is requested. The cable temperature rises from the environment temperature and at about 20 seconds the temperature control starts to limit cable temperature to a limit set at about 100 degrees (left hand axis, 100V is 100 C). With some delay the duct temperature follows and when the current is turned off at 150 seconds the cable cools down together with the duct. Initially the cable supports the requested 1.5 A. At about 20 seconds the temperature control system takes over and limits the cable current to prevent further heating of the cable above the 100 C limit setting. Due to the duct heating up, cable temperature would further increase but the temperature control system gradually reduces cable current to keep cable temperature under control. Eventually the system settles to a 0.8 A cable current.

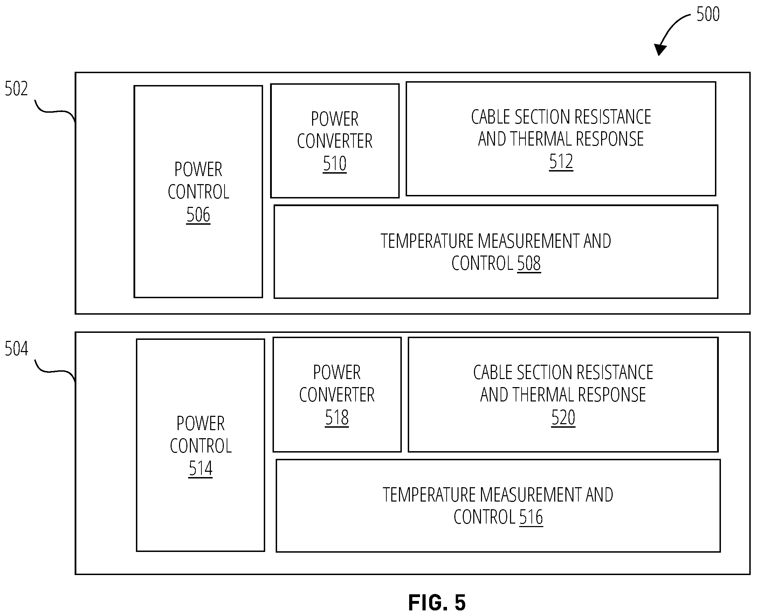

FIG. 5 depicts an exemplary multi-cable model 500 for one high current cable and one lower current cable in a duct. For example the first cable system 502 may carry around 1.5 A, while the second cable system 504 is configured (e.g., with different component and material ratings) to carry higher current, for example to deliver 10 A of current over a cable with lower resistance.

The first cable system 502 comprises a power control 506, temperature measurement and control 508 logic, a power converter 510, and cable section resistance and thermal response 512 (modeled as a circuit). Likewise, the second cable system 504 comprises a power control 514, a temperature measurement and control 516, a power converter 518, and a cable section resistance and thermal response 520. These components in one embodiment have structure as depicted in FIG. 1, although the component values will vary between them due to the different current capacity requirements of the two cables.

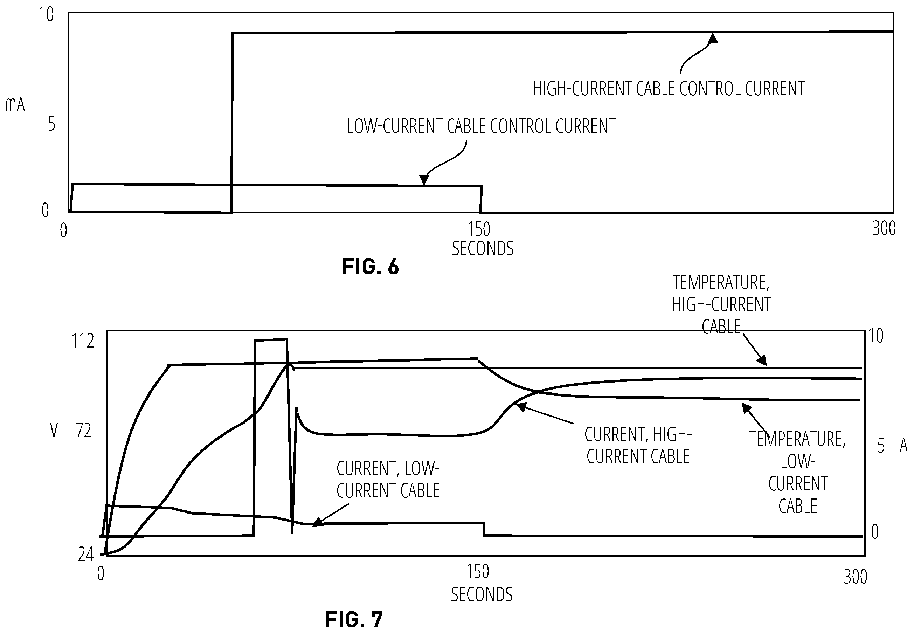

Time constants and controller settings will thus be somewhat different between the two models, but readily determined along with component and material ratings by those of ordinary skill in art in view of this disclosure. Both cables dissipate their heat into the same duct. Examples of control current settings for the exemplary double cable system are depicted in FIG. 6. The low current cable control is operated as described previously. In other words, 1.5 A (1.5 mA control current) is requested from 1 sec to 150 seconds in the example of FIG. 6. The high current cable control requests 10 A (10 mA control current) starting at 60 seconds. The resulting cable currents in one example are depicted in FIG. 7.

The low current cable system operates as described previously, until the high current cable system turns on. At this point the high current cable is not yet at the limit and turns on at full capacity and then quickly reduces current to about 5 A (after a bounce) whereas the low current system operates at about 0.8 A. Only when the low current cable is turned off at 150 seconds, the high current cable reaches it thermal potential at about 8A. In case the high current cable is used for a required rapid charge of one system and the low current cable is used for an overnight charge of another system then this is an un-economical use of the cables.

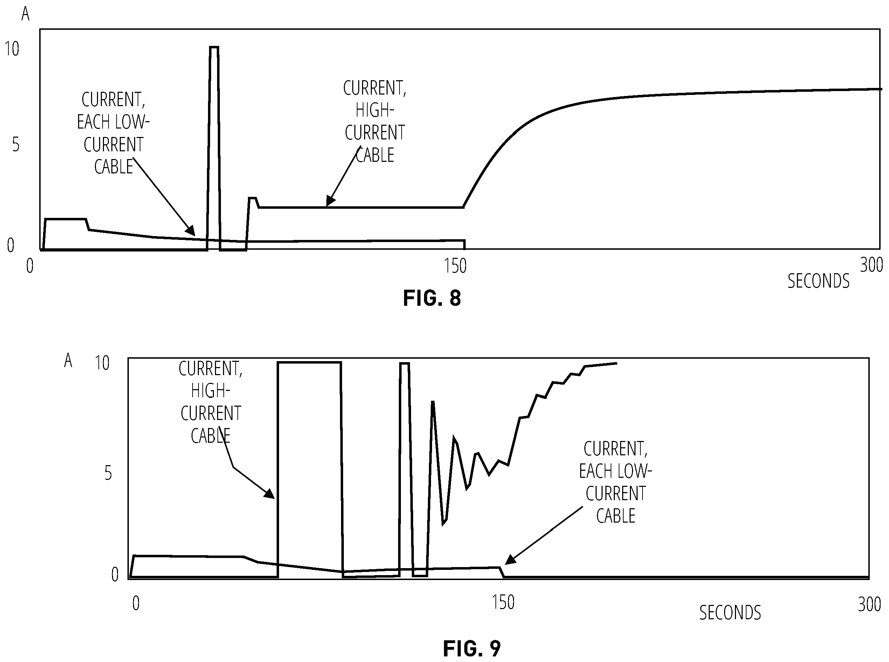

If more cables are present in the duct, the current behavior may become more undesirable. For example exemplary cable currents in a system with three low current cables and one high current cable are depicted in FIG. 8. The current in the high current cable is limited to merely 2A as long as the three low current cables are (each) at about 0.5 A. For different controller types or parameter settings the control loops may also interact with each other to result in unwanted unstable operation of the system. One such example is the unstable cable currents in a system with high current output depicted in FIG. 9. The high current system tends to be unstable as long as the low-current cables are adding heat into the system.

In order to improve current control in a bundle of cables and optimize economic use of the bundles a cable current controller should preferably monitor the individual temperature profiles of each one of the cables in the bundle. From monitoring these individual temperature profiles, a controller should then determine a transfer function from power load of each individual cable to itself and also to the other cables in the bundle. This transfer function is position dependent in each one of the cables because the proximity to other cables may vary and cables may be added or branch out. The transfer function can be mathematically resolved from measured current loads and temperature values as the current load values vary. Of course, the environment temperature varies as well and this can be measured as an additional parameter, optionally as a position dependent variable along a cable duct length.

For each cable a position dependent transfer function results that has as an input the power loads of each cable that is monitored and optionally also environment, cable duct or adjacent cable temperatures. This set of transfer functions then permits a controller to automatically evaluate the expected temperature rise or fall in any one of the cables for a change in the current loads of the set of cables. This is done for all the cables at all the positions of interest. With this information an optimal current load can be computed that makes best use of the cables in the duct while keeping the worst case temperature at all locations and cables under control, or at least keeping those temperatures within a desired profile. The predictive nature of this current control system avoids the risk of instabilities due to unwanted coupling of normal individual cable control loops with responses that are limited by thermal time constants of self-heating and of heating due to neighboring cables.

A further advantage lies in the ability to optimize the economic value to energy transport in a cable bundle by assigning a value to current load of each cable, where this value can vary. For instance, running an Air-Conditioning (AC) unit can take priority over charging of a car battery for a car that is not needed short-term or already has a sufficient charge level for a planned trip. Specifically, if a building or equipment is getting too hot, too humid or too cold. For such decisions, information of solar load, precipitation or humidity and environmental temperature at one or more locations may be included in the transfer models and value models used to assign priorities and compute value. Vice versa quick car charging can take precedence over running an AC.

For such decisions parameters such as estimated trip length and trip timing may be included in the priority and value models used to assign cable currents. Also, in general, high current cables may take precedence over lower current cables that may have higher resistance; in such high resistance cables (whether the resistance is high by design or due to wear) the current may be reduced on purpose to enable more current on low resistance cables. Or vice versa, an essential low power service, such as a lifeline service, may have priority over balancing a battery charge on high current cables.

With appliances that can control their current draw, such as with battery charges, controlled heaters or motors an optimal dynamic load profile can be established, keeping the cable temperatures within safe limits and providing the best value. Vice versa a current or voltage controller may be used at the voltage source to limit energy provided to the loads at the ends of the cables, for such loads that can tolerate that. The simplest control is an obvious on/off control, as a minimum measure that can provide system safety at a minimum cost during a cable shut-down event. But many modern systems can also provide a varying current control. In many cases limiting energy supply to certain loads will have negligible cost, particularly in systems with distributed energy storage.

It is only required to have sufficient energy present at all locations; maximum power at all locations is generally not needed all the time. It is therefore preferred to have a cable temperature monitoring system that not only monitors and controls individual cable temperatures but also combines the information about cable current loads and temperatures into a predictive model to optimize use of a cable bundle.

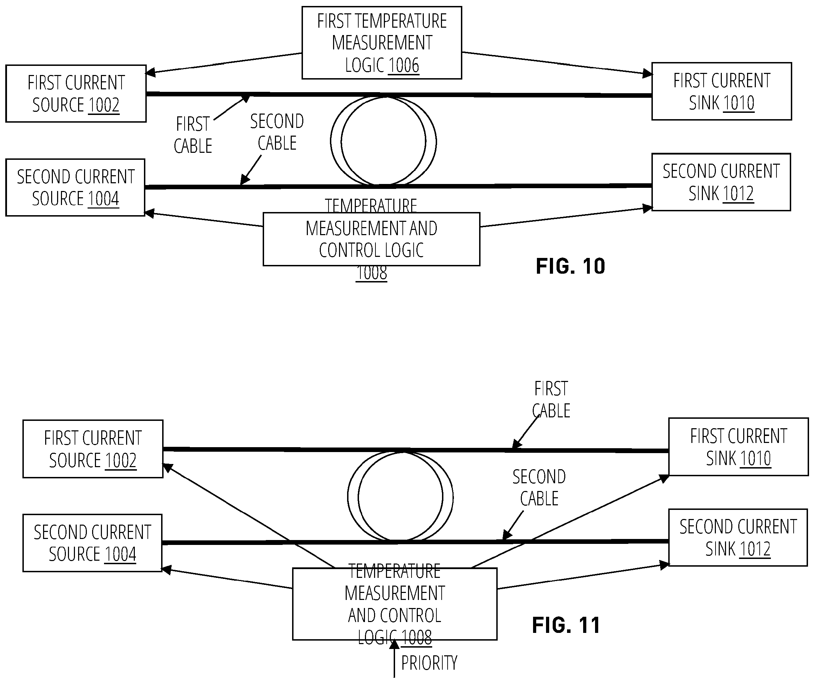

FIG. 10 - FIG. 13 depict various embodiments of cable temperature control systems. The various embodiments comprise a first current source 1002, a second current source 1004, first temperature measurement logic 1006, temperature measurement and control logic 1008, a first current sink 1010, a second current sink 1012, a current controller 1202, and a transfer function calculation algorithm 1302.

A system with individual temperature control systems for each cable is schematically depicted in FIG. 10. A first cable and a second cable are present. Each of the cables has a temperature measurement system installed and this temperature measurement system has a control connection to at least one of the current source or the current sink attached to the respective cable to be able to control to current on the cable. This forms a temperature control system for each cable.

At least in part the cables have one or more sections that run adjacent so that heat transfer takes place from one cable section to another cable section (loops connecting the cables). As a consequence, the temperature control systems are coupled through this heat transfer and this can lead to unwanted behavior as discussed in the previous sections.

In its most simple implementation as depicted for example in FIG. 11, a cable current control system that combines multiple cables comprises one, centralized temperature measurement and control (temperature measurement and control logic 1008) implemented in at least one cable section that controls current in at least another cable section.

A temperature measurement and control in a second cable section controls at least a current load or sink in a first cable section and optionally also a current load or sink in that second cable section. As an option the temperature measurement and control system can be programmed with, or be provided with priority information (load prioritization) on the currents supported by the first or second cables. This priority information may be based on economic value of current provided or importance of current provided. Such information may be combined into a function to compute overall value of the multiple currents supported by the system and the system may set cable current loads to optimize that value.

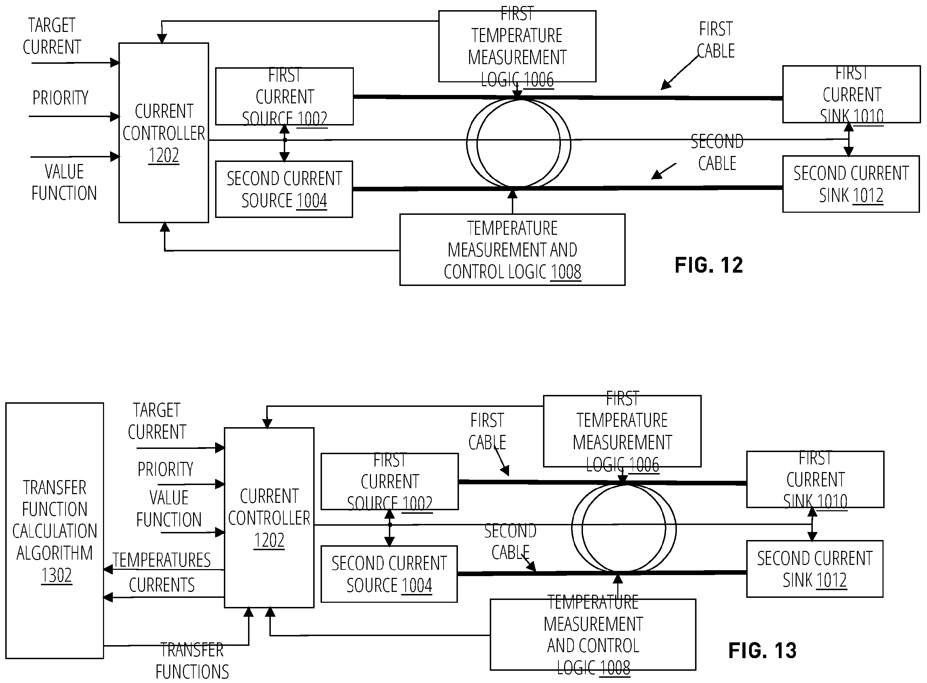

A more general control system such as depicted in FIG. 12 collects information from multiple temperature measurements on cable sections to control multiple current sources or sinks connected to the cables. The control system may take priority values and economic value functions (these can be any prioritization or value weight sets, functions, or algorithms known in the art) as an input as well as target current values. It may also take as an input additional temperature readings such as environment temperature and temperature measured along a duct or cable bundle.

In its simplest form, the control system may control or turn off the current in a first cable to limit the heat dissipated in a cable duct to increase the current carried by a second cable. In a more elaborate form, the control system may take as its input the economic value or priority of currents carrier on cables in a cable duct and optimally distribute cable current loads among the cables in the bundle, to stay within safe thermal limits with maximum economic benefit.

FIG. 13 depicts a cable temperature control system utilizing a transfer function calculation algorithm 1302 that determines transfer functions from cable current loads to cable temperature responses. The transfer function calculation algorithm 1302 may in some embodiments be part of the control system (e.g., current controller 1202, first temperature measurement logic 1006, and/or temperature measurement and control logic 1008). Cable current profiles (current as a function of time) and any and all of the available temperature profiles (temperature as a function of time) may be used to determine the transfer functions from cable currents to cable temperatures. In some embodiments, this may be limited to static transfer functions. In other embodiments the transfer function can take into account dynamic behavior such as changes in cable resistance with temperature. Other temperature measurements may also be used, in general for instance the environment temperature, or even wind, rain, or sun-load information may be accounted for when generating cable temperature response functions.

The system may proactively apply cable current test patterns to the cables in order to induce thermal responses. Such patterns may support the determination of transfer functions from cable current loads to cable temperature responses. While not depicted in FIG. 13, in some embodiments there may be a control connection between the transfer function calculation algorithm 1302 and the current controller 1202 to request such test patterns. In practice, the transfer function calculation algorithm 1302 may be implemented in the current controller 1202 in some embodiments.

In case cable current load information is not present a-priori then a proxy for cable current load values may still be derived from the available cable heating profiles by estimating the individual cable temperature from the total of cable temperatures found. Such a proxy may comprise an estimate of cable heat dissipation due to current load. If the cable type is known then the current load may also be estimated. From FIG. 4, it may be seen that essentially the duct temperature is measured even when the cable current is off.

Even if the duct was heated by an adjacent cable that does not have temperature or current monitoring, the heat dissipated by that adjacent cable still heats the duct and this can be detected by another cable with a temperature monitor, or by a temperature monitor in the duct. For a cable that does have temperature monitoring, the difference between duct temperature and internal cable temperature while the current is on also enables an estimate of cable thermal load. When the cable type is known an estimate of cable current load is enabled.

Cable load estimates may also be used to detect unknown current consumption in power distribution systems, such as illegal siphoning of current or leakage in a defect system wherein cable current is not reported or under-reported by a user and another direct measurement of true cable current is not available.

In general, a static transfer function may be of the form shown below (steady state shown below)

$$
\begin{pmatrix} T_1 \\ T_2 \\ \cdot \\ T_{M-1} \\ T_M \end{pmatrix} = \begin{pmatrix} R_{1,1} & R_{1,2} & \cdot & R_{N-1,1} & R_{N,1} & T_{1,1} & T_{1,2} \\ R_{2,1} & R_{2,2} & \cdot & R_{N-1,2} & R_{N,2} & T_{2,1} & T_{2,2} \\ \cdot & \cdot & \cdot & \cdot & \cdot & \cdot & \cdot \\ R_{M-1,1} & R_{M-1,2} & \cdot & R_{M-1N-1} & R_{M,N-1} & T_{M-1,1} & T_{M-1,2} \\ R_{M,1} & R_{M,2} & \cdot & R_{M,N-1} & R_{M,N} & T_{M,1} & T_{M,2} \end{pmatrix} \begin{pmatrix} P_1 \\ P_2 \\ \cdot \\ P_{N-1} \\ P_N \\ T_{env1} \\ T_{env2} \end{pmatrix}
$$

A set of N temperatures is determined as a linear combination of a set of N power dissipation values and a number of other temperatures (two environment temperatures are depicted as an example) . Power dissipation values are used instead of cable currents; such power dissipation values are of the form of a constant times the square of the cable current:

$$ P_{section} = I^2 \cdot R_{section} $$

Choosing this form mostly linearizes the equations. Some residual non-linearity remains for instance in the form of temperature dependent cable resistance. This may be included in the equations but is omitted here for simplicity of the explanation. A number of M temperature values are determined for N power dissipation values. In general, there may be multiple temperature sensing points configured along the length of any single cable. When defining the cable dissipation number as a single number per cable as in the equation above, there will be many more temperature sensing points than cable power values so that M >> N.

In order to determine the transfer-function, the elements of the matrix need to be known. In this example there are M*(N+2) elements. A number of P independent additional temperature inputs would correspond to M*(N+P) elements, meaning at least M*(N=P) equations need to be solved to find all the elements. One set of measurements results in M temperature equations. To resolve all elements in the matrix N+P such measurements are required, however these measurements need to represent sufficiently different measurement conditions so that the resulting set of equations can be solved with a non-singular matrix.

In case there are not enough test vectors for P (power vectors) then more can be generated by controlling cable currents accordingly. In general, the set of test vectors for P must not be able to be decomposed into less than N orthogonal vectors. Alternately the equations can be solved once the system has combined a sufficient number of power vectors. Because this may take a long time, in general the matrix may be pre-loaded with estimated values to permit the control system to operate before all transfer functions are known. There may be less control over the environmental temperature inputs and control may have to be delayed until enough information is available to determine matrix elements. Other environmental information about temperature, such as solar heat load and wind load, may preferably also be provided to the system to provide a further refinement to cable temperature calculations.

The DC response functions may be determined during static current load conditions on the cables. However, in general, dynamic load conditions may apply, and the time dependent functions of power values and temperature values may be transformed to frequency dependent functions by Fourier transformation. A similar matrix equation may be formulated for the frequency domain. In general, stimulus functions for the power dissipation, such as step functions, comprise a wide range of frequencies such that for many frequencies the set of equations can be solved. The matrix elements in this scenario each represent frequency responses to stimuli in the frequency domain. The right hand vector represents the Fourier transform of power and temperature time domain functions. The left hand vector represents the Fourier transform of resulting temperature time domain functions. Time domain functions can be recovered from inverse Fourier transform.

$$
\begin{bmatrix} T_1(\omega) \\ T_2(\omega) \\ \cdot \\ T_{M-1}(\omega) \\ T_M(\omega) \end{bmatrix} = \begin{bmatrix} R_{1,1}(\omega) & R_{1,2}(\omega) & \cdot & R_{N-1,1}(\omega) & R_{N,1}(\omega) & T_{1,1}(\omega) & T_{1,2}(\omega) \\ R_{2,1}(\omega) & R_{2,2}(\omega) & \cdot & R_{N-1,2}(\omega) & R_{N,2}(\omega) & T_{2,1}(\omega) & T_{2,2}(\omega) \\ \cdot & \cdot & \cdot & \cdot & \cdot & \cdot & \cdot \\ R_{M-1,1}(\omega) & R_{M-1,2}(\omega) & \cdot & R_{M-1N-1}(\omega) & R_{M,N-1}(\omega) & T_{M-1,1}(\omega) & T_{M-1,2}(\omega) \\ R_{M,1}(\omega) & R_{M,2}(\omega) & \cdot & R_{M,N-1}(\omega) & R_{M,N}(\omega) & T_{M,1}(\omega) & T_{M,2}(\omega) \end{bmatrix} \begin{bmatrix} P_1(\omega) \\ P_2(\omega) \\ \cdot \\ P_{N-1}(\omega) \\ P_N(\omega) \\ T_{env1}(\omega) \\ T_{env2}(\omega) \end{bmatrix}
$$

Most frequency response functions are smooth so that they may be interpolated at missing frequencies. In general Fourier transforms will be performed on sets of discretized data samples resulting in frequency responses at discrete frequency values. A discrete Fourier Transform (DFT) or specifically a Fast Fourier Transform (FFT) may be used. Data may be windowed before FFT as common in FFT signal processing. At each discrete frequency a set of equations is generated that can be solved. As previously noted, interpolation may be used to fill-in missing frequency responses.

Other methods may also be used, such as based on the Laplace transform or using correlation analysis of temperature responses to stimuli such as power variations (the latter is often also implemented via Fourier transforms). Also, the actual measured cable temperatures may be included in the power to cable temperature transfer models to improve the precision of temperature predictions made based on these transfer models.

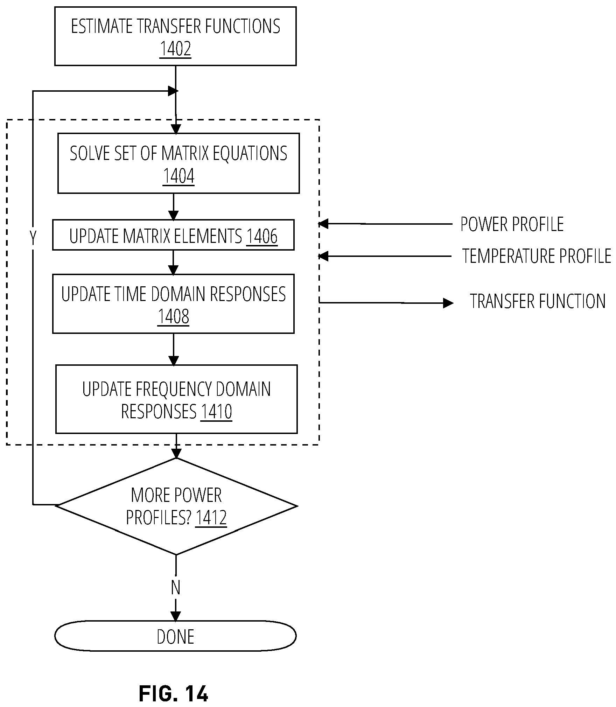

FIG. 14 depicts an example of a process for estimating and updating transfer functions. The transfer functions are first estimated (block 1402) in a matrix and the matrix equations are solved (block 1404). This provides an initial transfer function for use in current control on the cables. The matrix elements, time domain temperature responses, and frequency domain responses are then updated based on received power and/or temperature profiles (block 1406, block 1408, and block 1410 respectively) for example from the first temperature measurement logic 1006, and/or temperature measurement and control logic 1008, and or current controller 1202. The transfer function is updated as more power/temperature profiles are received (decision block 1412). More generally the process for estimating and updating transfer functions may include only some of the steps between block 1404 and 1410, inclusive. For example the portion of the process encompassed by the dashed box may include only blocks block 1404 and block 1406, or block 1408 alone, or block 1410 alone.

It may be preferred to apply the predictive model to operate all cables at all times within safe temperature limits and it may be further preferred to apply a current load distribution over the cables that results in an optimal economic value of energy transport on the cables. The current load distribution may be controlled by the energy source or by the energy consumers on the cables where current load controllers can range from simple on/off control to variable voltage or current control systems.

Optimization of the economic value of energy provided by the cable bundle preferably includes parameters such as amount of energy needed, time frame wherein the energy is needed and cost of delaying delivering of that energy. For instance, the charge state of batteries and the planned departure time and required range for a trip of an electric vehicle may be considered. Also, the temperature of an AC controlled room may be considered and solar load, wind load, environment temperature and predictions thereof may be considered. A function may be defined with parameters linking individual cable current values to economic value. For essential cable currents a priority scheme may designed, including a group of top priority currents that need to be carried regardless of economic value.

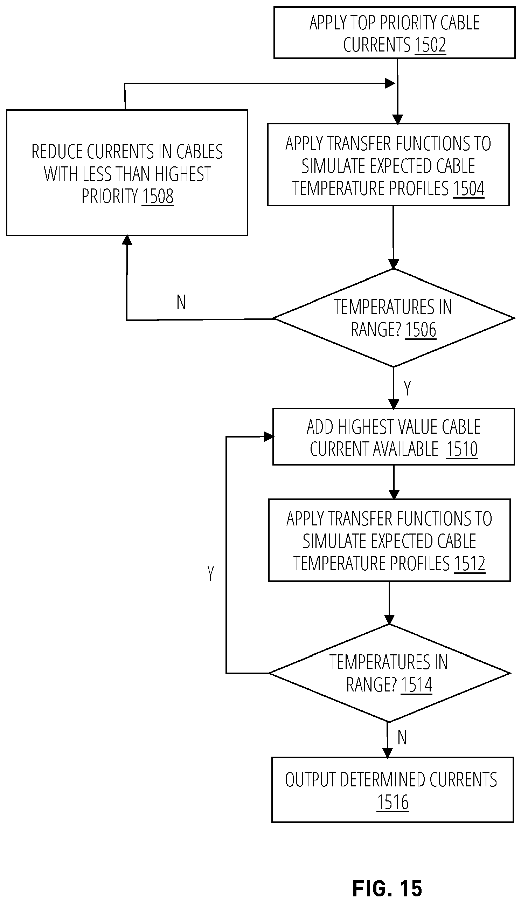

FIG. 15 depicts a possible implementation of an optimization scheme for cable currents. Given a request for cable currents with top priorities and values per cable current a controller could evaluate different scenarios. FIG. 15 shows operations in the controller before actual currents are put out by the system. A request for currents is available before entering the operations in FIG. 15. Firstly, the control system performs a simulation wherein the top priority currents are assigned (block 1502). These are currents that are considered essential and thus may not directly be bound to an economic value. A simulation is performed with the given transfer functions to estimate cable temperatures (block 1504). In case temperatures are acceptable (decision block 1506) the system moves on to simulate cable temperatures (block 1512) with currents added in that carry economic value (block 1510). In case temperatures are already exceeded, currents are reduced (block 1508), where the group of top priority currents may be organized such that there still is a priority differentiation within this group so that the lower priorities may be removed first. If there is only one category in the top priority group the system may select one or more output currents at random to reduce or remove.

In case the group of top priority currents can be put out without violating temperature limits (decision block 1514) then the next highest value output current can be added (block 1510) to the output currents and in simulation new expected temperature profiles can be computed (block 1512) and further high value output currents can be added until either a temperature limit is reached or all target output currents are realized. When the simulation is done and thus an optimal set of output currents has been simulated that provides a best combination of top priority currents and value adding output currents then these currents are output by the current control system (block 1516), either by controlling current source outputs or current sink consumption.

The simulations can be performed on a micro-processor system that is able to perform many simulations within the time available to make a next decision on actual output currents to generate. This is possible due to the relatively slow time constants for cable or cable duct heating that apply (in the seconds to minutes or even hour range). The same microprocessor system may also be constantly provided with feedback on actual cable currents and temperatures to update the transfer function models used, so that temperature predictions remain accurate.

The examples herein focus on cable bundles. However the techniques generally apply also to single cables that may be in a bundled (such as rolled up on a drum) or an extended state so that the thermal response of the cable temperature to current load and the time constants thereof may vary. A position dependent cable temperature monitoring system may continually determine these response parameters on the fly to establish control of cable current load and optionally also to control cable extension requirements, for instance by moving a drum to retract or extend the cable. In this consideration the cost of cable wear versus energy transport limitation may be traded off. For such a position-dependent cable temperature monitoring system, the proximity of other sections of the cable, in a rolled up state, is analogous to the proximity of other cables in a cable duct, with the constraint that the other cables have the same properties and same current load. Mathematically the model is the same as are its predictive capabilities.

In a cable duct, cable sections may run adjacent to each other only some of the distance of their travel. They may branch off or get added in over the length of the duct. These scenarios are accounted for by the position dependent model that accommodates situations including from one to many cables present in a section of duct, drum, or other area. In some cases, particular sections of a cable duct form thermal bottlenecks for a system either due to the bundling of too many cables or due to the enclosed mounting of such a cable duct section such that insufficient cooling is present. Such sections may be identified either by temperature measurement or in the temperature modeling using the transfer functions. After identification of the bottlenecks, remedies may be applied, such as un-bundling of cables or adding cooling (such as permitting more airflow).

Signaling between the temperature-monitoring and prediction systems, and energy sources and/or energy sinks, may be provided as needed to perform the control functions. The signaling may include measured cable current and load values from energy source or sink devices in the system. The signaling may take place in the form of power line communication, fiber optic communication, wireless communication or another form of communication.

The techniques and systems described herein may be applied to achieve an increase of energy transport capabilities of cables for a given conductor area. For given energy transport performance and current availability requirements a reduction in conductor area may be achieved. This may result in reduction of cable cost, size and weight. The gains and improvements may be particularly pronounced for cables bundled together in cable ducts or wound on cable drums.

More complicated systems may comprise many cable bundles in multiple ducts that branch and combine. Such systems may utilize power converters that re-distribute or adjust current or power over cables in these ducts. The transfer models determined for temperature modeling of cables in multiple ducts may be combined for many ducts into a large transfer model that is used to optimize the overall distribution of power using the many cables in the many ducts in a larger system.

In addition to the transfer models to estimate cable temperatures, optimization algorithms for the power distribution in a larger system may include up-to-date network topology information and power carrying capability information of cables and converters installed, power sources and sinks available, where this topology information may change on the fly as the state of power sources, sinks and cables change over time.

As an example, consider a set of three cables in a duct. Three-phase power cables are assumed with the following parameters for cables 1, 2 and 3 with copper conductor cross-sections of 1.5, 4.5 and 2.5 mm$^2$ respectively:

| Property | Cable 1 | Cable 2 | Cable 3 |
|---|---|---|---|
| Resistivity (milli-ohm/meter) | 22.6 | 12.56 | 37.67 |
| Heat Capacity (J/m K) | 323.55 | 380.59 | 289.23 |
| Thermal Resistance Through Cable Insulation (m K/W) | 1.04 | 0.94 | 1.14 |
| Cable Diameter (mm) | 15.6 | 16.8 | 14.8 |

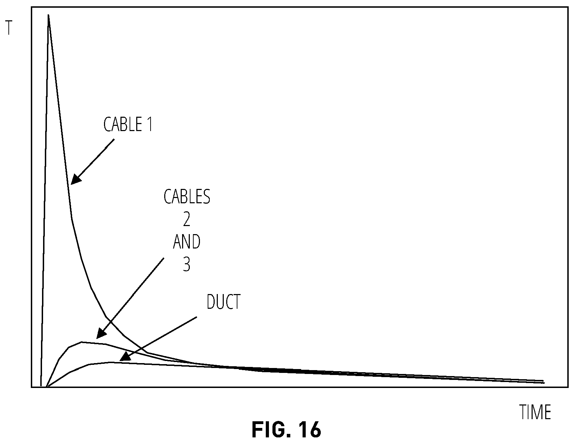

Assume the duct has a heat capacity of 3200 J/m K and a thermal resistance of 0.5 m K/W. The cables are assumed to have 30% contact with the duct (so their thermal conductivity to the duct is 30% of that determined by the thermal resistance). They are assumed to have 20% contact to adjacent cables. Average cable thermal resistance from insulation to air is chosen to be 25 m K/W. For the duct, that is 1.5 m K/W for thermal resistance to air and environment through fixtures of the duct. With these parameters, an example of cable and duct temperature response to an impulse current in cable 2 is depicted in FIG. 16. The temperature response shows a rapid increase of cable temperature for the duration of the spike. The largest and fastest increase is in cable 2 where the current spike is applied. The other two cables follow with a delay and the duct follows with a greater delay due to its large thermal mass. As time progresses all temperatures decay and generally follow the duct temperature.

Applying an impulse test for each of the cables in the duct allows determination of impulse response of the cables themselves and also the thermal cross-coupling between the cables and to the duct.

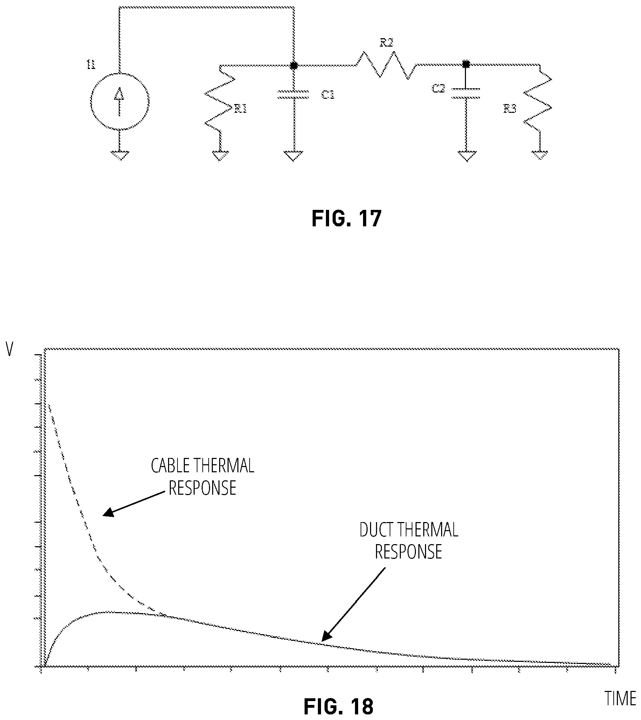

The response of the cable follows an exponential decay after the first step and then follows the much slower decay of the duct temperature. This may be modelled with two time constants, for instance with a two-pole RC circuit as depicted in FIG. 17. FIG. 18 shows that the impulse response of this circuit model is similar to the cable response simulation curves in FIG. 16.

A system with two time constants has the following impulse response:

$$T(t) = A \cdot e^{\frac{-t}{\tau_A}} + B \cdot e^{\frac{-t}{\tau_B}}$$

where the time constants are determined by the circuit components. In general, the accuracy of the circuit model may be improved by increasing the number of time constants in the circuit.

For a linear system, the response to an arbitrary waveform is the sum of impulse responses for each input value of that arbitrary waveform. With multiple inputs the system response is the sum of the individual responses to these inputs. When the system impulse responses are known for the multiple inputs, then the system response to arbitrary current waveforms applied to each of the cables may be computed. Temperature responses to impulses on cable 1, 2 and 3 are depicted in FIG. 18 (left, middle, and right frames, respectively). The cable temperature responses may then be determined as follows.

$$\delta T_j(t) = a_i \cdot h_{ji}(t - \tau_i)$$

where $h^{ij}$ is the impulse response of temperature in cable j to an impulse $\delta(t)$ in cable i. A current waveform $x_i$ on cable i is described as an integral over the impulse responses:

$$x_i(t) = \int_{-\infty}^{\infty} x_i(\tau) \cdot \delta(t - \tau) \, d\tau$$

Then the resulting temperature waveform is the convolution of impulse response function and current waveform:

$$T_j(t) = \int_{-\infty}^{\infty} x_i(\tau) \cdot h_{ji}(t - \tau) \, d\tau$$

In a linear system, for multiple cables each with their own current waveforms:

$$T_j(t) = \sum_{i=1}^{M} \int_{-\infty}^{\infty} x_i(\tau) \cdot h_{ji}(t - \tau) \, d\tau$$

In a time discrete form this is rewritten as:

$$T_j(t_k) = \sum_{i=1}^{M} \sum_{k=-\infty}^{\infty} x_i(t_k) \cdot h_{ji}(t_{n-k})$$

$$\delta(t_k) = \text{if}(t_k = 0, 1, 0) \qquad \text{and}: \qquad t_k = \Delta t \cdot k$$

where $h_{ij}$ is the temperature response in cable j to an impulse in cable i where the impulse is defined as a value of one (1) for the duration of one sample time step, and sampling step size $\Delta t$.

The model is not strictly linear. The heat dissipation in the cable is linear in cable resistance but quadratic in cable current. The rest of the differential equations for heat transport are linear (except for cable resistance that is weakly temperature dependent). A better input to for the model is the square of the cable current that is proportional to the actual dissipation in the cable.

Whereas the cable power dissipation that determines the amount of heat generated includes the cable resistance that is not a-priori known, the (rms) cable current is known from measurement at a cable terminal. Using the square of this cable current is sufficient to linearize the model.

When including the cable resistance, the temperature dependence the system of equations again becomes non-linear:

$$T_j(t_k) = \sum_{i=1}^{M} \sum_{\lambda=-\infty}^{\infty} [x_i(t_\lambda)]^2 \frac{\rho[T_i(t_\lambda)]}{\rho(T_{ref})} \cdot h_{ij}(t_{k-\lambda})$$

where p(T) is the temperature-dependent resistivity of the conductor material and $T_{ref}$ is a reference temperature.

Copper resistivity may be approximated by:

$$\rho_{Cu}(T) = \rho_{Cu}(25°C) \cdot [1 + a \cdot (T - 25°C)]$$

with a temperature coefficient around 0.4%/K.

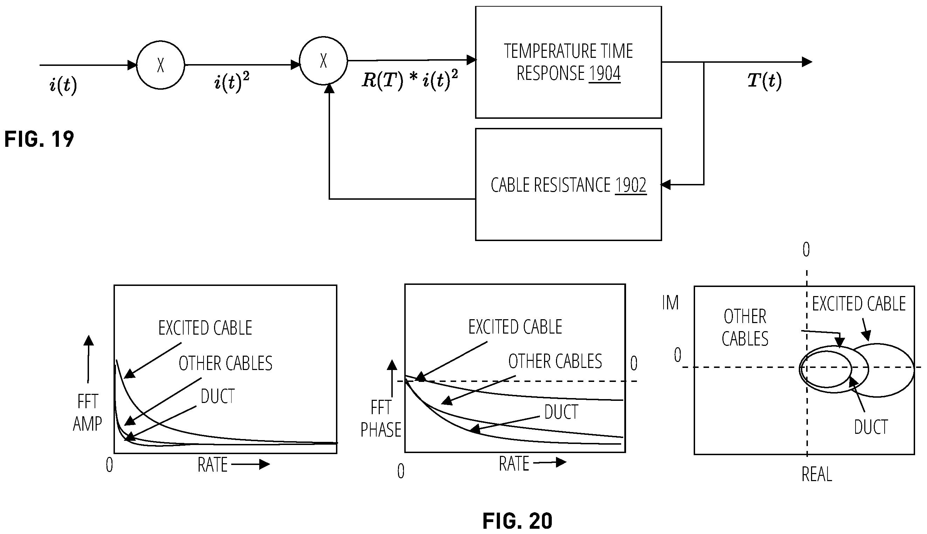

The model output for cable resistance 1902 becomes an input for the temperature time response 1904, for a cable resistance R that varies due to the temperature dependence of resistivity ρ (and a given length L and cross-section A of a conductor). See FIG. 19.

The equation may be solved by iterating with computed cable temperatures filled back into the next iteration. The iterations converge on a self-consistent solution for cable temperatures, and the cable temperatures can thus be predicted for a random input of cable currents.

The impulse response method works well in case the equations are linearized by using the square of cable currents and the cable conductor resistivity temperature coefficient is included in an iterative predictive model. However, this method involves the application of well-defined impulses to each cable and measuring the temperature responses. In some applications this may be problematic because cable currents are varying continuously and are determined by demand. Utilizing the impulse response approach may involve applying special loads to the cables to generate demand impulses on request and also shutting down current on many cables in the system to measure individual impulse responses.

In a general, current demand may vary more or less randomly for the cables installed. The currents may be measured at either end of a cable and thus they are usually readily ascertained. In a linear system, a frequency analysis may be performed of responses to known excitations and from this analysis the frequency dependent transfer function from excitation to response may be determined. For a given frequency dependent response the inverse Fourier transform of that response is equal to the impulse response that was used in a predictive model for cable temperatures.

For an input signal s(t) as a function of time t a spectrum is defined by its Fourier transform S(ω) as a function of ω. Fourier analysis is performed for an input signal s(t):

$$S(\omega) = \int_{-\infty}^{\infty} s(t) \cdot e^{-i\omega \cdot t} dt$$

The magnitude of the complex number S is the magnitude of the system response to a frequency and the angle is the phase of the response. In a numerical implementation the Fourier integral is usually evaluated with an FFT (Fast Fourier Transform) that takes discrete time samples of the signal and provides a spectrum at discrete frequencies:

For an output signal o(t) the FFT is defined as O(ω). For an input signal s(t) and an output signal o(t), Fourier transforms are defined:

$$S = FFT(s(t_k))$$

$$O = FFT(o(t_k))$$

The system transfer function is then given by:

$$H = O/S$$

provided S does not include any zeros. The transfer function H may be computed from impulse response h(t) as:

$$H(\omega) = \int_{-\infty}^{+\infty} h(t) \cdot e^{-i \omega t} \, dt$$

In system where small values of S produce small values of O, the sensitivity to noise or other interfering spectra from multiple current sources on various cables in the measured data represented by $\varepsilon$ is enhanced for small values of S:

$$H + H\varepsilon = \frac{(O + \varepsilon)}{S} = \frac{O}{H} + \frac{\varepsilon}{S}$$

The error term $H\varepsilon$ may become arbitrarily large for small values of S. In order to overcome this issue use is made of the fact that whereas S (and thus O) can be a series of near-random complex numbers, H tends to be a smooth function of frequency. Thus, for adjacent frequency bins the magnitude and angle of H tend to be near constant. Averaging of O or S has a result tending towards zero due to the random phase of the complex numbers. Re-writing the equation with c in the exponent denoting complex conjugate:

$$H + H\varepsilon = \frac{O + \varepsilon}{S} \cdot \frac{S^c}{S^c} = \frac{(O + \varepsilon) \cdot S^c}{|S^2|}$$

The quantity $|S^2|$ represents the signal power (a real positive definite number for each bin) that can be averaged over a number of bins. The quantity $O*Sc$ is a complex number with smooth phase equal to that of H that can also be averaged over a number of bins. Choosing the number of bins large enough so that signal power is present and small enough such that H is near constant over that number of bins results in suppression of the noise as outlined below.

This permits averaging of numerator and denominator N=2*n+1 adjacent bins around a frequency bin j with near identical frequency response, so that approximately:

$$H_j + H\varepsilon_j = \frac{\frac{1}{N} \sum_{i = j-n}^{j+n} (O_i + \varepsilon_i)(S_i)^c}{\frac{1}{N} \sum_{i = j-n}^{j+n} |(S_i)^2|}$$

With a sufficient sampling time, the bin frequency spacing can be made small enough that the frequency response phase and amplitude do not change significantly with that range, enabling averaging to be performed. The numerator and denominator tend to grow proportionally with the number of bins, apart from the error term:

$$H\varepsilon_j \approx \frac{\sum\limits_{i=j-n}^{j+n} \varepsilon_i \left(S_i\right)^c}{\sum\limits_{i=j-n}^{j+n} \left|\left(S_i\right)^2\right|}$$

When $\varepsilon$ is not correlated with S, the phase of their product varies randomly from bin to bin. The magnitude of the product tends to grow proportionally with the square root of N. Because the denominator thus tends to grow with N, the noise contribution can be suppressed with a factor that tends to grow as the square root of N. Thus by proper choice of N and the total sampling time (and thereby the bin spacing), the frequency response may be determined for arbitrary cable currents. In this manner, the temperature response in cable k to a current in cable q, denoted $H_{kq}$, is:

$$Hkq_j \approx \frac{\dfrac{1}{N}\sum\limits_{i=j-n}^{j+n} \left(Ok_i + \varepsilon_i\right)\left(Sq_i\right)^c}{\dfrac{1}{N}\sum\limits_{i=j-n}^{j+n} \left|\left(Sq_i\right)^2\right|}$$

Here $S_q$ is the FFT of the current in cable q, or more preferably the FFT of the square of that cable current, preferably multiplied with a conductor resistivity factor for cable q for a temperature of cable q before computing the FFT. $O_k$ is the FFT of the temperature measured in cable k.

The transfer function H can be used to predict the response to an arbitrary combination of cable currents. However, the predicted cable temperatures may differ from the actual cable temperatures realized in practice for corresponding currents. This is due to non-linearity of the system.

Cable system transfer functions are non-linear due to the square relation between heat generation and current and also due to the temperature dependence of resistivity. The linearization may be improved by defining the input signals as the square of cable currents $s(t)=i(t)^2$. The transfer functions H are recomputed and then applied to estimate system temperature to a random current pattern on the cables. The resulting prediction is closer to the cable temperatures actually realized, but there may still exist some differences. This is due to the cable resistivity dependence on cable temperature, which injects further non-linearity to the system. As previously described, cable temperature prediction including temperature dependence of resistance may be done in an iterative manner, where at each step the temperature is provided as a feedback into the heat generation (that is the excitation function). Using this in the cable temperature prediction based on the model and iterating to allow the cable temperature to stabilize gives estimated cable temperatures that exceed actual cable temperatures. This is due to the fact that the transfer function was determined as if the system was linear in $s(t)=i(t)^2$ whereas it is not linear. To resolve this problem, the system is further linearized before determining the transfer function. The cable resistivity dependence on temperature, available as a measured value, is included as a function when determining the excitation function on a cable q:

$$s_q(t) = i_q(t)^2 \, \rho\left(T_q(t)\right)$$

With this definition of s, the system is properly linearized and the transfer function may be determined. The transfer function is used to predict the cable temperature, again using the iteration wherein computed cable temperature is fed back into the excitation function. In the first iteration the predicted temperature values are not included yet, and the cable temperature estimate may be too low. However, the temperature result is fed back into the excitation function and with this input the temperature response is re-calculated. After repeated iterations the cable temperature is self-consistent and the predicted cable temperature is a good match to actual cable temperatures.

Transfer functions for each excitation to each cable temperature may be determined from random currents applied to each of the cables simultaneously. The transfer function from an current-excited cable to other cables and to the duct for FFT amplitude (left panel), FFT phase (center panel) and complex plane (right panel) is depicted in FIG. 20.

The transfer function exhibits a low-pass behavior (left plot for amplitude of response). It rapidly drops as the rate increases. Especially for the duct the frequency response drops rapidly, mostly due to the large thermal mass of the duct that makes it respond slowly to temperature changes. The phase of the response goes negative, so the response lags behind the excitation as can be expected for the temperature of an object that accumulates heat. For high frequencies the response phase of the duct and the other cables wraps around -180 degrees to 180 degrees. Although not depicted, there will typically be an increasing noise in the detected phase response with increasing frequency because the measured response becomes very small compared to system noise.

A complex plane plot of the transfer functions is shown to the right wherein real and imaginary part of the response functions is plotted as a curve for increasing frequency. Low frequency is to the right with positive real part and the imaginary part near zero. High frequency is in the center (real and imaginary part of response are near zero). The upper half plane is mirrored from the lower half plane, representing negative frequencies. The magnitude of the noise does not change that much with frequency, but when amplitudes are low has a large effect on the phase, hence there can be a large amount of phase noise at higher frequencies. The fit functions are smooth, as expected in a system with a limited number of parameters. In this example a fraction of two complex polynomials of limited complexity (order 3) is used to fit the response function data. For missing frequency points (or at 0 Hz) the response can be found from the fit function that also provides interpolation or extrapolation. Also, because it is known that the system response will be smooth, a fit function tends to be a better approximation of the true response determined from transfer function analysis than discrete data points because datapoints can be perturbed by noise that remains after the correlation analysis. In the fit function much of that noise is averaged out.

The correlation analysis may be improved by including all (known) sources into the correlation analysis. For multiple inputs in a system, even when not correlated, the error term in the correlation analysis can be large because it contains temperature perturbations not just due to measurement noise but also significant fluctuations due to heat inducted by various cables, for example a response in cable k to a current (or power dissipation) in cable q::

$$Hkq_j = \frac{\frac{1}{N}\sum_{i=j-a}^{j+a}\left(\sum_{r=0}^{M} Okr_i + \epsilon_i\right)\cdot(Sq_i)^c}{\frac{1}{N}\sum_{i=j-a}^{j+a}\left|(Sq_i)^2\right|}$$

For M cables, the response measured in cable k includes the sum of all cables contributing heat to that cable. The response function is thus affected by every cable. Even though the currents in the other cables may not be correlated to that in cable q, so that their contribution to the response function decreases with the square root of N (with N the number of frequency bins averaged), a large number of bins may need to be averaged and also there is no guarantee that there is no correlation. For instance a day/night pattern on cable currents will likely be correlated for many cables, so that a partial correlation of cable currents may exist.

For each combination of cable current and temperature response, there is a frequency response H. Considering temperature response O in one of the cables (cable k) for bin index i (dropping index k for simplicity of notation):

$$O_i = \sum_q H_{qi}\cdot S_{qi}$$

Here $H_{qi}$ is the frequency response to current in cable q in bin i, and $S_{qi}$ is the FFT of the current (or square thereof) in cable q in bin i. For a number of bins N spaced closely enough, H does not vary much so that within that bin range approximately:

$$O_i = \sum_q H_q S_{qi}$$

where O and S are known and H is calculated. With N bins and M cables contributing (q=0..M-1) this results in N equations with M unknowns, so the problem to solve is over-determined, written in matrix form:

$$\mathbf{MS} \cdot \vec{H} = \vec{O}$$

$$\mathbf{MS}_{qi} = S_{qi}$$

where vector H comprises elements Hq, vector O represents the response measured in each of the bins.

Including an error vector this is rewritten as:

$$\mathbf{MS} \cdot \vec{H} + \vec{\varepsilon} = \vec{O}$$

This set of equations is solved to minimize the error term, for example using an efficient least squares method. The solution includes all known sources and the remaining error is limited to only noise and unknown sources. Even when currents on cables are partially correlated a good solution may still be found.

By solving the matrix equation with minimal error $\varepsilon$, the response $H_{kq}$ for each combination of cable q as heat source and cable k (or duct) temperatures responding to that heat source is found. The response functions may be more accurate and exhibit reduced noise using this approach over the one previously described. After the response functions have been obtained the cable temperatures may be estimated from cable currents (bin index not included in equation):

$$O_k = \sum_q H_{kq} \cdot S_q$$

where $S_q$ is the FFT of the excitation in cable q, preferably based on the square of the current in cable q and preferably multiplied with a factor modeling the conductor resistivity temperature dependence. $H_{kq}$ is the response of cable k to excitation in cable q and $O_k$ is the response of cable k.

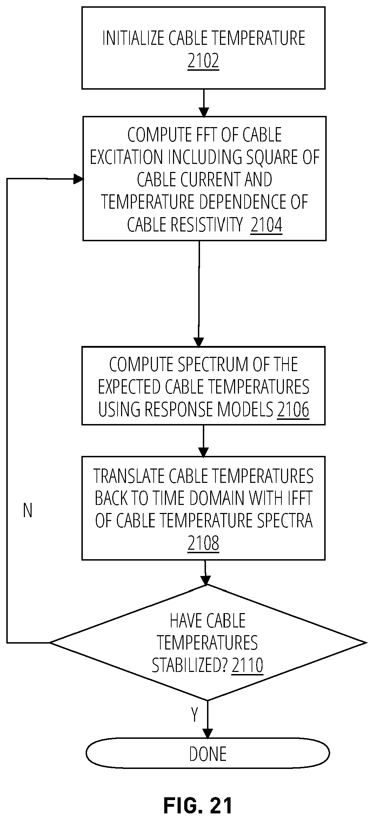

Referring to the process depicted in FIG. 21 to determine the model for the cable temperature, including linearization, in one embodiment:

Initialize cable q temperature as a function of time, at room temperature, e.g., $T_q(t) = 25$ C (block 2102).

Compute FFT of excitation in each of the cables, the excitation due to current modified such that the temperature model is linearized by using the square of cable current and the temperature dependence of cable resistivity using the measured cable temperatures (block 2104):

$$S_q = \mathrm{FFT}\left( i_q(t)^2 \cdot \rho\left(T_q(t)\right) \right)$$

Take a set of measurement data and compute their FFTs:

$$O_k = \mathrm{FFT}\left( o_k(t) \right)$$

and using the results for S and O for each cable, find a least squares solution to the set of equations (as explained previously) resulting in the $H_{kq}$ response function of cable k to excitation in cable q:

$$\mathbf{MS} \cdot \vec{H} + \vec{\varepsilon} = \vec{O}$$

This completes model determination. Once the model has been determined, apply it to predict cable temperatures (block 2106). Including the cable resistivity temperature response involves iteration (see previous description).

Compute the temperature responses in each of the cables:

$$O_k = \sum_q H_{kq} \cdot S_q$$

and transform the temperature response back to time domain for all cables that are excited (block 2108):

$$T_q(t) = IFFT(O_q)$$

Repeat these steps by filling back the cable temperatures into the FFT computation (block 2104) of cable excitation until the solution stabilizes (block 2110).

If all cables are monitored for current, the transfer functions may be determined for the cables that do not have an associated temperature sensor. For the cables without temperature sensor the transfer function due to heat generated in that cable to other cables is known.

In case not all cables are monitored, use may be made of reciprocity in the heat transfer equations. The temperature response of cable 2 to heat generated in cable 1 may be estimated from that in cable 1 to heat generated in cable 2. If only cable 1 is monitored, then an estimate may be made as follows:

$$H_{21} = H_{12} \cdot \frac{ACu_2}{ACu_1}$$

$$H_{22} = H_{11} \cdot \frac{ACu_1}{ACu_2}$$

where ACu represents the conductor area in cables 1 and 2, respectively. Self-heating may be estimated from a reference cable that is monitored, or a reference model. The excitation function for heat in each cable is modeled as:

$$s_q(t) = i_q(t)^2 \cdot \rho(T_q(t))$$

The ratio of conductor area corrects for the difference in wire resistance, so that the transfer function estimate is adjusted for the amount of heat generated in each of the cables for a given current.

When the temperature rise of the cables is significant then the conductor resistivity temperature dependence must be considered as well, or else cable temperature rise estimates will be inaccurate. However, where the temperature of cables is not known, the equations cannot be linearized in the manner described previously by including a temperature dependent scaling term in determining the transfer functions from current to cable temperature. Instead, for such cables the cable temperatures may be predicted based on a transfer function, and with that estimate the transfer functions may be determined again including the predicted temperature, leading to a new prediction of cable temperatures.

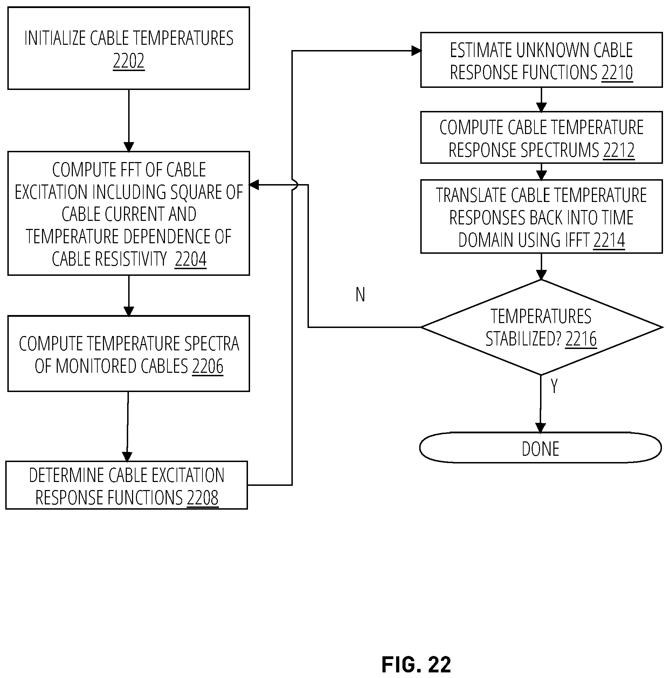

After a number of iterations, a self-consistent solution may be determined for cable temperatures and predicted cable temperatures including transfer functions that correspond to those temperatures. The procedure is described below in conjunction with FIG. 22.

If cable q is not monitored, the amount of heat generated in cable q cannot be estimated very accurately where the resistivity dependence on temperature plays an important role. For such cases an iterative approach to building the model may be utilized.

Initialize cable q temperature as a function of time as room temperature (block 2202):

$$T_q(t) = 25°C$$

Compute FFT of excitation in each of the cables (block 2204), the excitation due to current modified such that the temperature model is linearized by using the square of cable current and the temperature dependence of cable resistivity using the measured cable temperatures where available:

$$S_q = FFT\left(i_q(t)^2 \cdot \rho\left(T_q(t)\right)\right)$$

Take a set of measurement data and compute their FFTs where available (block 2206):

$$O_k = FFT\left(o_k(t)\right)$$

Using the results for S and O for each cable, find a least squares solution to the set of equations (as explained previously) resulting in the $H_{kq}$ response function of cable k to excitation in cable q (block 2208):

$$MS \cdot \vec{H} + \vec{\varepsilon} = \vec{O}$$

Estimate missing cable q temperature responses from reciprocity and similarity to cable k (block 2210):

$$H_{qk} = H_{kq} \cdot \frac{ACu_q}{ACu_k} \qquad \text{And:} \qquad H_{qq} = H_{kk} \cdot \frac{ACu_k}{ACu_q}$$

Compute the temperature responses in each of the cables using the response functions (block 2212):

$$O_k = \sum_q H_{kq} \cdot S_q$$

Transform the temperature response back to time domain for all cables that are excited (block 2214):

$$T_q(t) = IFFT\left(O_q\right)$$

Repeat this process, starting with the FFT computation, by substituting the estimated cable temperatures for those cables that have no temperature monitor into the FFT calculation until the solution stabilizes (block 2216). This process may converge on predicted cable temperatures that agree well with the actual cable temperatures.

The following description applies to a duct or cable drum temperature monitor, and may also be applied to a single cable with temperature monitor, or to enhance model determination in a system with a few monitored cables. Here the use of non-linearity to improve cable thermal response models of non-monitored cables is introduced, a technique that may be applied more generally.

In one application, only the duct, or only one of the cables, has a cable temperature monitor. In that case all cable temperatures need to be estimated using pre-determined cable temperature models for cables in a duct, and how they thermally couple to the duct. The duct response to cable excitations may be computed for all monitored cables. The estimates may be further improved by making use of the non-linearity in the model.

The conductor has a temperature dependent resistivity:

$$\rho_{Cu}(T) = \rho_{Cu}(25°C) \cdot \left[1 + a \cdot (T - 25°C)\right]$$

The duct temperature response may behave like a low-pass filter for internal cable temperatures, therefore it is difficult to directly see fast cable temperature changes in a duct temperature response and this makes it more difficult to estimate cable temperatures when only a duct temperature response is measured. However, the non-linearity helps to mix frequency products from fast temperature changes down to low frequencies.

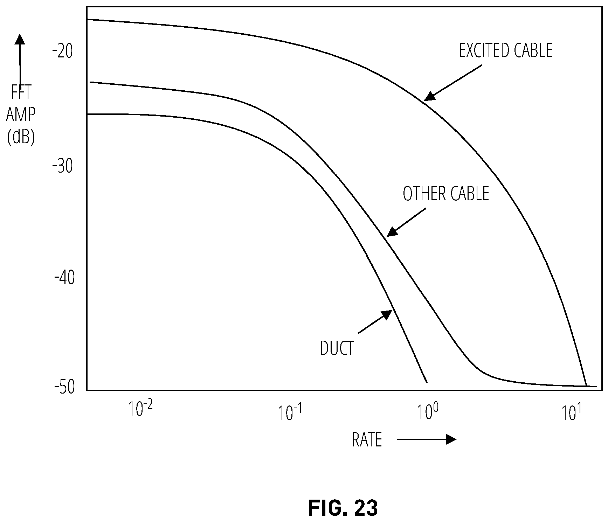

FIG. 23 depicts an example of the temperature responses by other cables and the duct to current excitation of one of the cables. The duct response is the weakest and starts to roll down at a frequency of around 0.1 per hour. The response by the other cables also exhibits a low roll frequency. However, the response within the excited cable extends for almost another decade, so internal cable temperature responds considerably faster than the temperatures that can be measured external to the cable, such as in the duct or other cable temperatures.

To a first order the cable resistivity is a linear function of temperature. This leads to a second order distortion term in the cable heat generation:

$$s_q(t) = i_q(t)^2 \cdot \frac{\left[\rho_{Cu}(25°C) \cdot \left[1 + a \cdot \left[T_q(t) - 25°C\right]\right]\right]}{\rho_{Cu}(25°C)}$$

To a first order the temperature response is a linear response to the heat generation in the cable, so:

$$s0_q(t) = i_q(t)^2 \qquad \text{and} \qquad FFT\left[T0_q(t)\right] = FFT\left(s0_q(t)\right) \cdot H_{qq}$$

When including the distortion term then harmonics are added to the heat generation, to a first approximation:

$$s1_q(t) = s0_q(t) \cdot \left[1 + a \cdot \left[T0_q(t) - 25°C\right]\right] = s0_q(t) \cdot (1 - a \cdot 25°C) + a \cdot s0_q(t) \cdot T0_q(t)$$

The first term is a linear term and does not produce any mixing products. The second term however is not linear and does produce mixing products. S0 and T0 can be represented as a Fourier series:

$$s0_q(t) = \sum_i sa_i \cdot \cos\left(\omega_i + \phi a_i\right) \qquad T0_q(t) = \sum_i Ta_i \cdot \cos\left(\omega_i + \phi T_i\right)$$

$$s0_q(t) \cdot T0_q(t) = \left(\sum_i sa_i \cdot \cos\left(\omega_i + \phi a_i\right)\right) \cdot \left(\sum_i Ta_i \cdot \cos\left(\omega_i + \phi T_i\right)\right)$$

For a pair of frequencies $\omega 1$ and $\omega 2$ in the S0 and T0 sums, respectively, the product is:

$$s0_q(t) \cdot T0_q(t) = sa_1 \cdot Ta_2 \cdot \cos\left(\omega_1 \cdot t + \phi a_1\right) \cdot \cos\left(\omega_2 \cdot t + \phi T_2\right)$$

This may be expressed as:

$$s0_q(t) \cdot T0_q \cdot t = 0.5 \cdot \left(sa_1 \cdot Ta_2\right) \cdot \left[\cos\left(\omega_1 \cdot t + \phi a_1 + \omega_2 \cdot t + \phi T_2\right) + \cos\left[\left(\omega_1 - \omega_2\right) \cdot t + \phi a_1 - \phi T_2\right]\right]$$

The second term is of most interest, whereas $\omega 1$ and $\omega 2$ may be high frequencies that cannot be observed on the duct, their difference can be at a low frequency that may be detected at the duct using commercially available and practical sensors. Because the excitation signal s0 (that does not contain the temperature correction) is known, the actual temperature spectrum T0 may be deduced from low frequency duct temperature response measurements.

The equations shown above were given as a first order approximation but the conclusion, that the low frequency duct temperature response is dependent on having a correct cable temperature response model, may be generalized when an iterative loop is used to predict cable temperature, including fast temperature responses.

When multiple cables are present in the system then the coupling from cable to cable also becomes of interest.

To a first order the temperature response in a first cable q is a linear response to the heat generated in itself and to the heat generated in a second cable k, so:

$$s0_q(t) = i_q(t)^2 \qquad \text{and} \qquad FFT\left[T0_q(t)\right] = FFT\left(s0_q(t)\right) \cdot H_{qq} \qquad FFT\left[T0_k(t)\right] = FFT\left(s0_k(t)\right) \cdot H_{qk}$$

When including the distortion term then intermodulation is added to the heat generation, to a first approximation:

$$sl_q(t) = s0_q(t) \cdot \left[ 1 + a \cdot \left[ T0_q(t) + T0_k(t) - 25\,^\circ C \right] \right] = s0_q(t) \cdot (1 - a \cdot 25\,^\circ C) + a \cdot s0_q(t) \cdot \left[ T0_q(t) + T0_k(t) \right]$$

The first term is a linear term and does not produce any mixing products. The second term is not linear and does produce mixing products including a contribution from the second cable k. S0 and T0 contributions may be written as a Fourier series:

$$s0_q(t) = \sum_i saq_i \cdot \cos(\omega_i + \phi aq_i) \quad T0_q(t) = \sum_i Taq_i \cdot \cos(\omega_i + \phi Tq_i) \quad T0_k(t) = \sum_i Tak_i \cdot \cos(\omega_i + \phi Tk_i)$$

$$s0_q(t) \cdot \left[ T0_q(t) + T0_k(t) \right] = \left( \sum_i saq_i \cdot \cos(\omega_i + \phi aq_i) \right) \left( \sum_i Taq_i \cdot \cos(\omega_i + \phi Tq_i) + \sum_i Tak_i \cdot \cos(\omega_i + \phi Tk_i) \right)$$

For a pair frequencies $\omega 1$ and $\omega 2$ in the S0 and T0 sums respectively the product is:

$$s0_q(t) \cdot \left[ T0_q(t) + T0_k(t) \right] = saq_1 \cdot Taq_2 \cdot \cos(\omega_1 \cdot t + \phi aq_1) \cdot \cos(\omega_2 \cdot t + \phi Tq_2) \dots$$
$$+ saq_1 \cdot Tak_2 \cdot \cos(\omega_1 \cdot t + \phi aq_1) \cdot \cos(\omega_2 \cdot t + \phi Tk_2)$$

This may be expressed as:

$$s0_q(t) \cdot \left[ T0_q(t) + T0_k(t) \right] = 0.5 \cdot (saq_1 \cdot Taq_2) \left[ \begin{array}{l} \cos(\omega_1 \cdot t + \phi aq_1 + \omega_2 \cdot t + \phi Tq_2) \dots \\ + \cos\left[ (\omega_1 - \omega_2) \cdot t + \phi aq_1 - \phi Tq_2 \right] \end{array} \right] \dots$$
$$+ 0.5 \cdot (saq_1 \cdot Tak_2) \left[ \begin{array}{l} \cos(\omega_1 \cdot t + \phi aq_1 + \omega_2 \cdot t + \phi Tk_3) \dots \\ + \cos\left[ (\omega_1 - \omega_2) \cdot t + \phi aq_1 - \phi Tk_2 \right] \end{array} \right]$$

The first part stems from non-linearity due to the self-heating of the cable, the second part is caused by non-linearity due to the second cable heating the first cable. Because the current (or heating) waveforms on first and second cables are at least in part uncorrelated, first and second terms are at least in part non-correlated spectra and their mixing products may be detected separately on the duct or in another cable.

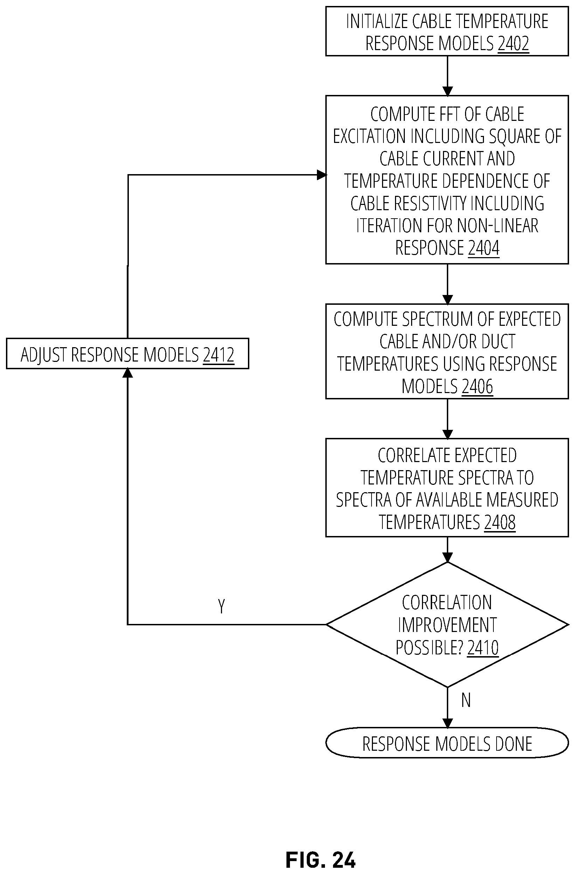

One embodiment for determining the model for cable temperature behavior using these mixing products is described next and in conjunction with FIG. 24. Variations of this approach will be readily apparent to those of ordinary skill in the art.

Start with an estimate for the cable temperature response models (block 2402). Compute FFT of cable excitation including square of cable current and cable resistivity temperature dependence including iteration for non-linear response (block 2404). Compute cable temperatures and cable temperature spectra including mixing products (block 2406). Determine correlation with temperatures measured in duct or other cables (block 2408). Adjust cable temperature model to improve correlation (block 2412), this can be an iterative process (block 2410) wherein model parameters are tuned to a threshold of precision.

The correlation analysis may be performed separately for different terms in the cable temperatures (such as linear terms and mixing terms) or for multiple terms at once as previously described.

The environmental temperature is an obvious parameter that affects cable temperatures as an offset. Solar irradiation adds a heat source to the cables and air flow and humidity thereof affect the cooling of a cable. To the extent these environmental influences can be predicted or measured (such as a day/night rhythm, sunshine and weather forecasts) they may be included in the predictive or descriptive cable temperature models. In a similar way as shown in the correlation analysis herein for cable current heat sources, correlation with the environmental parameters can also be established to complement the model. For instance, a temperature offset due to the environmental temperature may instead be replaced by a temperature response function to environmental temperature that may include the lag behind the environmental temperature.

Whereas for a fixed installation the transfer functions are generally constant over a significant period of time, thus facilitating determination of transfer functions based on data collected over a significant period of time, certain environmental parameters affect the transfer functions themselves. Examples are wind speed, air humidity and condensation.

These add time varying parameters in the transfer functions. For high wind speed, cables are cooled more effectively and reach equilibrium with the air temperature more quickly. The response functions may therefore drop and also the frequency dependence of the response changes.

Introducing time varying parameters in the cable temperature models, either based on estimation or based on long-term analysis of cable temperature data with the cables operating under different environmental conditions, may accommodate the response changes as a function of environmental conditions. As before, such an analysis can include the optimization of correlations between predicted and measured cable temperatures.

Current and voltage measurements at both ends of a cable section may facilitate determining the actual power dissipation on a cable section and cable section resistivity. Such measurements can be included in the thermal modeling of cable sections to further enhance the models.

Un-monitored cables without any temperature or current monitor present an unknown source of heat into the system that may vary. Nevertheless, their presence may be known and the cable types and maximum currents allowed (for instance limited by circuit breakers). The cable duct thermal model may use typical models for the contribution of such cables to the heat generated in the cable duct and either assume the maximum currents or expected worst case current values based on statistical analysis of duct or cable temperature behavior. Such a statistical analysis may be based on the amount of heat detected from unknown uncorrelated sources perturbing the responses measured to known sources (monitored cables). That heat leads to a residual in the correlation analysis that cannot be fitted, but the amount can be estimated.

Based on the temperature predictions including such an assumption for non-monitored cables the system may still react to turn non-monitored cables on or off or impose current limits on them in order to permit required currents on other cables, whether these are monitored or non-monitored.

The cable temperature models with or without environmental parameters may be constantly updated and refined as data is collected over time, for instance using correlation analysis and also using methods such as machine learning or processing measured data in the cloud and comparison to similar systems or physical models as they become available. Model parameters may be continually updated either locally on a local computing device or obtained from a remote processing site. Model predictions and optimization of use of the installation may likewise be generated on a local computing device or on a remote processing site and communicated via a data connection. It is fully anticipated that processing environmental, measured and model data on a remote site, such as cloud processing and big data collection from multiple cable duct systems, can help in improving cable duct models and temperature predictions.

Software Implementations

The systems disclosed herein, or particular components thereof, may in some embodiments be implemented as software comprising instructions executed on one or more programmable device. By way of example, algorithms and formulas utilized in the disclosed systems may be implemented by an application, an app, drivers, or services. In one particular embodiment, aspects of the system such as modeling cables and ducts, computing transfer functions, and determining control current may be implemented as a service that executes as one or more processes, modules, subroutines, or tasks on a server device so as to provide the described capabilities to one or more client devices over a network. However the system need not necessarily be accessed over a network and could, in some embodiments, be implemented by one or more app or applications on a single device or distributed between a mobile device and a computer, for example.

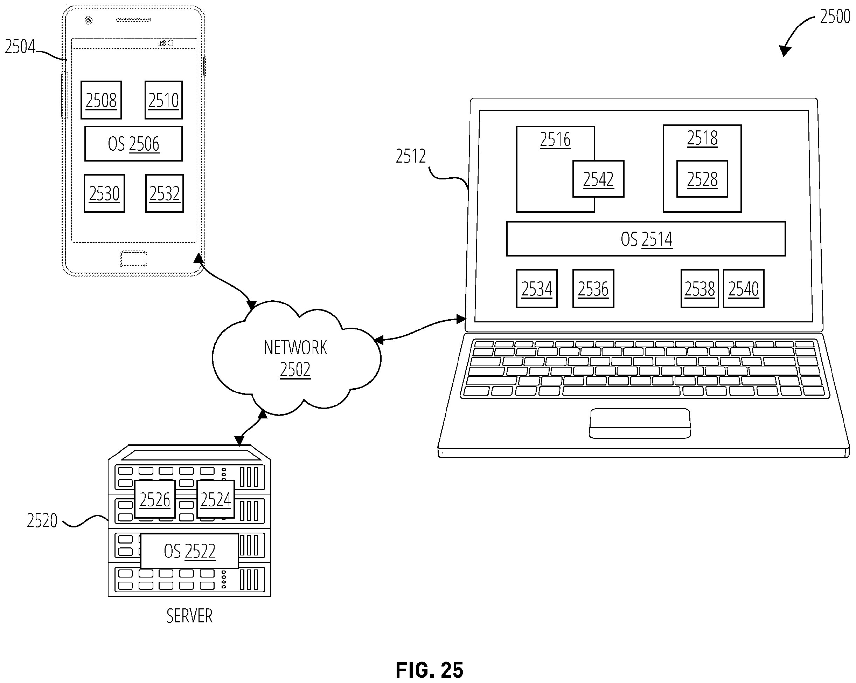

Referring to FIG. 25, a client server network configuration 2500 illustrates various computer hardware devices and software modules coupled by a network 2502 in one embodiment. Each device includes a native operating system, typically pre-installed on its non-volatile RAM, and a variety of software applications or apps for performing various functions.

The mobile programmable device 2504 comprises a native operating system 2506 and various apps (e.g., app 2508 and app 2510). A computer 2512 also includes an operating system 2514 that may include one or more library of native routines to run executable software on that device. The computer 2512 also includes various executable applications (e.g., application 2516 and application 2518). The mobile programmable device 2504 and computer 2512 are configured as clients on the network 2502. A server 2520 is also provided and includes an operating system 2522 with native routines specific to providing a service (e.g., service 2524 and service 2526) available to the networked clients in this configuration.

As is well known in the art, an application, an app, or a service may be created by first writing computer code to form a computer program, which typically comprises one or more computer code sections or modules. Computer code may comprise instructions in many forms, including source code, assembly code, object code, executable code, and machine language. Computer programs often implement mathematical functions or algorithms and may implement or utilize one or more application program interfaces.

A compiler is typically used to transform source code into object code and thereafter a linker combines object code files into an executable application, recognized by those skilled in the art as an "executable". The distinct file comprising the executable would then be available for use by the computer 2512, mobile programmable device 2504, and/or server 2520. Any of these devices may employ a loader to place the executable and any associated library in memory for execution. The operating system executes the program by passing control to the loaded program code, creating a task or process. An alternate means of executing an application or app involves the use of an interpreter (e.g., interpreter 2528).

In addition to executing applications ("apps") and services, the operating system is also typically employed to execute drivers to perform common tasks such as connecting to third-party hardware devices (e.g., printers, displays, input devices), storing data, interpreting commands, and extending the capabilities of applications. For example, a driver 2530 or driver 2532 on the mobile programmable device 2504 or computer 2512 (e.g., driver 2534 and driver 2536) might enable wireless headphones to be used for audio output(s) and a camera to be used for video inputs. Any of the devices may read and write data from and to files (e.g,. file 2538 or file 2540) and applications or apps may utilize one or more plug-in (e.g., plug-in 2542) to extend their capabilities (e.g., to encode or decode video files).

The network 2502 in the client server network configuration 2500 can be of a type understood by those skilled in the art, including a Local Area Network (LAN), Wide Area Network (WAN), Transmission Communication Protocol/Internet Protocol (TCP/IP) network, and so forth. These protocols used by the network 2502 dictate the mechanisms by which data is exchanged between devices.

Machine Embodiments

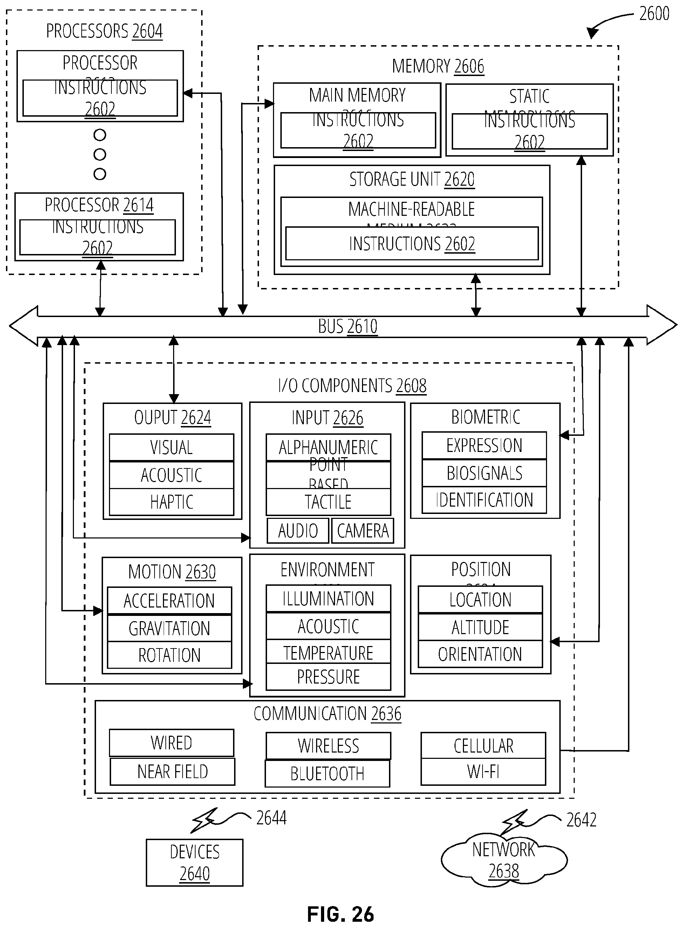

FIG. 26 depicts a diagrammatic representation of a machine 2600 in the form of a computer system embodiment within which logic may be implemented to cause the machine to perform any one or more of the algorithms, calculations, or processes disclosed herein. The machine 2600 may for example be a mobile computing device, a laptop or desktop computer, or a cloud server device.

Specifically, FIG. 26 depicts a machine 2600 comprising instructions 2602 (e.g., a program, an application, an applet, an app, or other executable code) for causing the machine 2600 to perform any one or more of the functions or methods discussed herein. For example the instructions 2602 may cause the machine 2600 to carry out any of the algorithms, calculations, or processes disclosed herein. The instructions 2602 configure a general, non-programmed machine into a particular machine 2600 programmed to carry out said functions and/or methods.

In alternative embodiments, the machine 2600 operates as a standalone device or may be coupled (e.g., networked) to other machines. In a networked deployment, the machine 2600 may operate in the capacity of a server machine or a client machine in a server-client network environment, or as a peer machine in a peer-to-peer (or distributed) network environment. The machine 2600 may comprise, but not be limited to, a server computer, a client computer, a personal computer (PC), a tablet computer, a laptop computer, a netbook, a set-top box (STB), a PDA, an entertainment media system, a cellular telephone, a smart phone, a mobile device, a wearable device (e.g., a smart watch), a smart home device (e.g., a smart appliance), other smart devices, a web appliance, a network router, a network switch, a network bridge, or any machine capable of executing the instructions 2602, sequentially or otherwise, that specify actions to be taken by the machine 2600. Further, while only a single machine 2600 is depicted, the term "machine" shall also be taken to include a collection of machines that individually or jointly execute the instructions 2602 to perform any one or more of the methodologies or subsets thereof discussed herein.

The machine 2600 may include processors 2604, memory 2606, and I/O components 2608, which may be configured to communicate with each other such as via one or more bus 2610. In an example embodiment, the processors 2604 (e.g., a Central Processing Unit (CPU), a Reduced Instruction Set Computing (RISC) processor, a Complex Instruction Set Computing (CISC) processor, a Graphics Processing Unit (GPU), a Digital Signal Processor (DSP), an ASIC, a Radio-Frequency Integrated Circuit (RFIC), another processor, or any suitable combination thereof) may include, for example, one or more processor (e.g., processor 2612 and processor 2614) to execute the instructions 2602. The term "processor" is intended to include multi-core processors that may comprise two or more independent processors (sometimes referred to as "cores") that may execute instructions contemporaneously. Although FIG. 26 depicts multiple processors 2604, the machine 2600 may include a single processor with a single core, a single processor with multiple cores (e.g., a multi-core processor), multiple processors with a single core, multiple processors with multiples cores, or any combination thereof.

The memory 2606 may include one or more of a main memory 2616, a static memory 2618, and a storage unit 2620, each accessible to the processors 2604 such as via the bus 2610. The main memory 2616, the static memory 2618, and storage unit 2620 may be utilized, individually or in combination, to store the instructions 2602 embodying any one or more of the functionality described herein. The instructions 2602 may reside, completely or partially, within the main memory 2616, within the static memory 2618, within a machine-readable medium 2622 within the storage unit 2620, within at least one of the processors 2604 (e.g., within the processor's cache memory), or any suitable combination thereof, during execution thereof by the machine 2600.

The I/O components 2608 may include a wide variety of components to receive input, provide output, produce output, transmit information, exchange information, capture measurements, and so on. The specific I/O components 2608 that are included in a particular machine will depend on the type of machine. For example, portable machines such as mobile phones will likely include a touch input device or other such input mechanisms, while a headless server machine will likely not include such a touch input device. It will be appreciated that the I/O components 2608 may include many other components that are not shown in FIG. 26. The I/O components 2608 are grouped according to functionality merely for simplifying the following discussion and the grouping is in no way limiting. In various example embodiments, the I/O components 2608 may include output components 2624 and input components 2626. The output components 2624 may include visual components (e.g., a display such as a plasma display panel (PDP), a light emitting diode (LED) display, a liquid crystal display (LCD), a projector, or a cathode ray tube (CRT)), acoustic components (e.g., speakers), haptic components (e.g., a vibratory motor, resistance mechanisms), other signal generators, and so forth. The input components 2626 may include alphanumeric input components (e.g., a keyboard, a touch screen configured to receive alphanumeric input, a photo-optical keyboard, or other alphanumeric input components), point-based input components (e.g., a mouse, a touchpad, a trackball, a joystick, a motion sensor, or another pointing instrument), tactile input components (e.g., a physical button, a touch screen that provides location and/or force of touches or touch gestures, or other tactile input components), audio input components (e.g., a microphone), one or more cameras for capturing still images and video, and the like.

In further example embodiments, the I/O components 2608 may include biometric components 2628, motion components 2630, environmental components 2632, or position components 2634, among a wide array of possibilities. For example, the biometric components 2628 may include components to detect expressions (e.g., hand expressions, facial expressions, vocal expressions, body gestures, or eye tracking), measure bio-signals (e.g., blood pressure, heart rate, body temperature, perspiration, or brain waves), identify a person (e.g., voice identification, retinal identification, facial identification, fingerprint identification, or electroencephalogram-based identification), and the like. The motion components 2630 may include acceleration sensor components (e.g., accelerometer), gravitation sensor components, rotation sensor components (e.g., gyroscope), and so forth. The environmental components 2632 may include, for example, illumination sensor components (e.g., photometer), temperature sensor components (e.g., one or more thermometers that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas detection sensors to detection concentrations of hazardous gases for safety or to measure pollutants in the atmosphere), or other components that may provide indications, measurements, or signals corresponding to a surrounding physical environment. The position components 2634 may include location sensor components (e.g., a GPS receiver component), altitude sensor components (e.g., altimeters or barometers that detect air pressure from which altitude may be derived), orientation sensor components (e.g., magnetometers), and the like.

Communication may be implemented using a wide variety of technologies. The I/O components 2608 may include communication components 2636 operable to couple the machine 2600 to a network 2638 or devices 2640 via a coupling 2642 and a coupling 2644, respectively. For example, the communication components 2636 may include a network interface component or another suitable device to interface with the network 2638. In further examples, the communication components 2636 may include wired communication components, wireless communication components, cellular communication components, Near Field Communication (NFC) components, Bluetooth® components (e.g., Bluetooth® Low Energy), Wi-Fi® components, and other communication components to provide communication via other modalities. The devices 2640 may be another machine or any of a wide variety of peripheral devices (e.g., a peripheral device coupled via a USB).

Moreover, the communication components 2636 may detect identifiers or include components operable to detect identifiers. For example, the communication components 2636 may include Radio Frequency Identification (RFID) tag reader components, NFC smart tag detection components, optical reader components (e.g., an optical sensor to detect one-dimensional bar codes such as Universal Product Code (UPC) bar code, multi-dimensional bar codes such as Quick Response (QR) code, Aztec code, Data Matrix, Dataglyph, MaxiCode, PDF417, Ultra Code, UCC RSS-2D bar code, and other optical codes), or acoustic detection components (e.g., microphones to identify tagged audio signals). In addition, a variety of information may be derived via the communication components 2636, such as location via Internet Protocol (IP) geolocation, location via Wi-Fi® signal triangulation, location via detecting an NFC beacon signal that may indicate a particular location, and so forth.

Instruction and Data Storage Medium Embodiments

The various memories (i.e., memory 2606, main memory 2616, static memory 2618, and/or memory of the processors 2604) and/or storage unit 2620 may store one or more sets of instructions and data structures (e.g., software) embodying or utilized by any one or more of the methodologies or functions described herein. These instructions (e.g., the instructions 2602), when executed by processors 2604, cause various operations to implement the disclosed embodiments.

As used herein, the terms "machine-storage medium," "device-storage medium," "computer-storage medium" mean the same thing and may be used interchangeably in this disclosure. The terms refer to a single or multiple storage devices and/or media (e.g., a centralized or distributed database, and/or associated caches and servers) that store executable instructions and/or data. The terms shall accordingly be taken to include, but not be limited to, solid-state memories, and optical and magnetic media, including memory internal or external to processors and internal or external to computer systems. Specific examples of machine-storage media, computer-storage media and/or device-storage media include non-volatile memory, including by way of example semiconductor memory devices, e.g., erasable programmable read-only memory (EPROM), electrically erasable programmable read-only memory (EEPROM), FPGA, and flash memory devices; magnetic disks such as internal hard disks and removable disks; magneto-optical disks; and CD-ROM and DVD-ROM disks. The terms "machine-storage media," "computer-storage media," and "device-storage media" specifically exclude carrier waves, modulated data signals, and other such intangible media, at least some of which are covered under the term "signal medium" discussed below.

Some aspects of the described subject matter may in some embodiments be implemented as computer code or machine-useable instructions, including computer-executable instructions such as program modules, being executed by a computer or other machine, such as a personal data assistant or other handheld device. Generally, program modules including routines, programs, objects, components, data structures, etc., refer to code that perform particular tasks or implement particular data structures in memory. The subject matter of this application may be practiced in a variety of system configurations, including hand-held devices, consumer electronics, general-purpose computers, more specialty computing devices, etc. The subject matter may also be practiced in distributed computing environments where tasks are performed by remote-processing devices that are linked through a communications network.

Communication Network Embodiments

In various example embodiments, one or more portions of the network 2638 may be an ad hoc network, an intranet, an extranet, a VPN, a LAN, a WLAN, a WAN, a WWAN, a MAN, the Internet, a portion of the Internet, a portion of the PSTN, a plain old telephone service (POTS) network, a cellular telephone network, a wireless network, a Wi-Fi® network, another type of network, or a combination of two or more such networks. For example, the network 2638 or a portion of the network 2638 may include a wireless or cellular network, and the coupling 2642 may be a Code Division Multiple Access (CDMA) connection, a Global System for Mobile communications (GSM) connection, or another type of cellular or wireless coupling. In this example, the coupling 2642 may implement any of a variety of types of data transfer technology, such as Single Carrier Radio Transmission Technology (1xRTT), Evolution-Data Optimized (EVDO) technology, General Packet Radio Service (GPRS) technology, Enhanced Data rates for GSM Evolution (EDGE) technology, third Generation Partnership Project (3GPP) including 3G, fourth generation wireless (4G) networks, Universal Mobile Telecommunications System (UMTS), High Speed Packet Access (HSPA), Worldwide Interoperability for Microwave Access (WiMAX), Long Term Evolution (LTE) standard, others defined by various standard-setting organizations, other long range protocols, or other data transfer technology.

The instructions 2602 and/or data generated by or received and processed by the instructions 2602 may be transmitted or received over the network 2638 using a transmission medium via a network interface device (e.g., a network interface component included in the communication components 2636) and utilizing any one of a number of well-known transfer protocols (e.g., hypertext transfer protocol (HTTP)). Similarly, the instructions 2602 may be transmitted or received using a transmission medium via the coupling 2644 (e.g., a peer-to-peer coupling) to the devices 2640. The terms "transmission medium" and "signal medium" mean the same thing and may be used interchangeably in this disclosure. The terms "transmission medium" and "signal medium" shall be taken to include any intangible medium that is capable of storing, encoding, or carrying the instructions 2602 for execution by the machine 2600, and/or data generated by execution of the instructions 2602, and/or data to be operated on during execution of the instructions 2602, and includes digital or analog communications signals or other intangible media to facilitate communication of such software. Hence, the terms "transmission medium" and "signal medium" shall be taken to include any form of modulated data signal, carrier wave, and so forth. The term "modulated data signal" means a signal that has one or more of its characteristics set or changed in such a matter as to encode information in the signal.

LISTING OF DRAWING ELEMENTS

    100 cable monitoring system
    102 power control

104 power converter
106 cable section resistance and thermal response
108 temperature measurement and control
110 duct section thermal model
200 control current waveform
500 multi-cable model
502 first cable system
504 second cable system
506 power control
508 temperature measurement and control
510 power converter
512 cable section resistance and thermal response
514 power control
516 temperature measurement and control
518 power converter
520 cable section resistance and thermal response
1002 first current source
1004 second current source
1006 first temperature measurement logic
1008 temperature measurement and control logic
1010 first current sink
1012 second current sink
1202 current controller
1302 transfer function calculation algorithm
1402 block
1404 block
1406 block
1408 block
1410 block
1412 decision block
1502 block
1504 block
1506 decision block
1508 block
1510 block
1512 block
1514 decision block
1516 block
1902 cable resistance
1904 temperature time response
2102 block
2104 block
2106 block
2108 block
2110 decision block
2202 block
2204 block
2206 block
2208 block
2210 block
2212 block
2214 block
2216 decision block
2402 block
2404 block
2406 block
2408 block
2410 decision block

2412 block
2500 client server network configuration
2502 network
2504 mobile programmable device
2506 operating system
2508 app
2510 app
2512 computer
2514 operating system
2516 application
2518 application
2520 server
2522 operating system
2524 service
2526 service
2528 interpreter
2530 driver
2532 driver
2534 driver
2536 driver
2538 file
2540 file
2542 plug-in
2600 machine
2602 instructions
2604 processors
2606 memory
2608 I/O components
2610 bus
2612 processor
2614 processor
2616 main memory
2618 static memory
2620 storage unit
2622 machine-readable medium
2624 output components
2626 input components
2628 biometric components
2630 motion components
2632 environmental components
2634 position components
2636 communication components
2638 network
2640 devices
2642 coupling
2644 coupling

"Algorithm" refers to any set of instructions configured to cause a machine to carry out a particular function or process.

"App" refers to a type of application with limited functionality, most commonly associated with applications executed on mobile devices. Apps tend to have a more limited feature set and simpler user interface than applications as those terms are commonly understood in the art.

"Application" refers to any software that is executed on a device above a level of the operating system. An application will typically be loaded by the operating system for execution and will make function calls to the operating system for lower-level services. An application often has a user interface but this is not always the case. Therefore, the term 'application' includes background processes that execute at a higher level than the operating system.

"Application program interface" refers to instructions implementing entry points and return values to a module.

"Assembly code" refers to a low-level source code language comprising a strong correspondence between the source code statements and machine language instructions. Assembly code is converted into executable code by an assembler. The conversion process is referred to as assembly. Assembly language usually has one statement per machine language instruction, but comments and statements that are assembler directives, macros, and symbolic labels may also be supported.

"Compiled computer code" refers to object code or executable code derived by executing a source code compiler and/or subsequent tools such as a linker or loader.

"Compiler" refers to logic that transforms source code from a high-level programming language into object code or in some cases, into executable code.

"Computer code" refers to any of source code, object code, or executable code.

"Computer code section" refers to one or more instructions.

"Computer program" refers to another term for 'application' or 'app'.

"Driver" refers to low-level logic, typically software, that controls components of a device. Drivers often control the interface between an operating system or application and input/output components or peripherals of a device, for example.

"Executable" refers to a file comprising executable code. If the executable code is not interpreted computer code, a loader is typically used to load the executable for execution by a programmable device.

"Executable code" refers to instructions in a ready-to-execute form by a programmable device. For example, source code instructions in non-interpreted execution environments are not executable code because they must usually first undergo compilation, linking, and loading by the operating system before they have the proper form for execution. Interpreted computer code may be considered executable code because it can be directly applied to a programmable device (an interpreter) for execution, even though the interpreter itself may further transform the interpreted computer code into machine language instructions.

"File" refers to a unitary package for storing, retrieving, and communicating data and/or instructions. A file is distinguished from other types of packaging by having associated management metadata utilized by the operating system to identify, characterize, and access the file.

"Instructions" refers to symbols representing commands for execution by a device using a processor, micro-processor, controller, interpreter, or other programmable logic. Broadly, 'instructions' can mean source code, object code, and executable code. 'instructions' herein is also meant to include commands embodied in programmable read-only memories (EPROM) or hard coded into hardware (e.g., 'micro-code') and like implementations wherein the instructions are configured into a machine memory or other hardware component at manufacturing time of a device.

"Interpreted computer code" refers to instructions in a form suitable for execution by an interpreter.

"Interpreter" refers to an interpreter is logic that directly executes instructions written in a source code scripting language, without requiring the instructions to a priori be compiled into machine language. An interpreter translates the instructions into another form, for example into machine language, or into calls to internal functions and/or calls to functions in other software modules.

"Library" refers to a collection of modules organized such that the functionality of all the modules may be included for use by software using references to the library in source code.

"Linker" refers to logic that inputs one or more object code files generated by a compiler or an assembler and combines them into a single executable, library, or other unified object code output. One implementation of a linker directs its output directly to machine memory as executable code (performing the function of a loader as well).

"Loader" refers to logic for loading programs and libraries. The loader is typically implemented by the operating system. A typical loader copies an executable into memory and prepares it for execution by performing certain transformations, such as on memory addresses.

"Machine language" refers to instructions in a form that is directly executable by a programmable device without further translation by a compiler, interpreter, or assembler. In digital devices, machine language instructions are typically sequences of ones and zeros.

"Module" refers to a computer code section having defined entry and exit points. Examples of modules are any software comprising an application program interface, drivers, libraries, functions, and subroutines.

"Object code" refers to the computer code output by a compiler or as an intermediate output of an interpreter. Object code often takes the form of machine language or an intermediate language such as register transfer language (RTL).

"Operating system" refers to logic, typically software, that supports a device's basic functions, such as scheduling tasks, managing files, executing applications, and interacting with peripheral devices. In normal parlance, an application is said to execute "above" the operating system, meaning that the operating system is necessary in order to load and execute the application and the application relies on modules of the operating system in most cases, not vice-versa. The operating system also typically intermediates between applications and drivers. Drivers are said to execute "below" the operating system because they intermediate between the operating system and hardware components or peripheral devices.

"Plug-in" refers to software that adds features to an existing computer program without rebuilding (e.g., changing or re-compiling) the computer program. Plug-ins are commonly used for example with Internet browser applications.

"Process" refers to software that is in the process of being executed on a device.

"Programmable device" refers to any logic (including hardware and software logic) who's operational behavior is configurable with instructions.

"Service" refers to a process configurable with one or more associated policies for use of the process. Services are commonly invoked on server devices by client devices, usually over a machine communication network such as the Internet. Many instances of a service may execute as different processes, each configured with a different or the same policies, each for a different client.

"Software" refers to logic implemented as instructions for controlling a programmable device or component of a device (e.g., a programmable processor, controller). Software can be source code, object code, executable code, machine language code. Unless otherwise indicated by context, software shall be understood to mean the embodiment of said code in a machine memory or hardware component, including "firmware" and micro-code.

"Source code" refers to a high-level textual computer language that requires either interpretation or compilation in order to be executed by a device.

"Subroutine" refers to a module configured to perform one or more calculations or other processes. In some contexts the term 'subroutine' refers to a module that does not return a value to the logic that invokes it, whereas a 'function' returns a value. However herein the term 'subroutine' is used synonymously with 'function'.

"Task" refers to one or more operations that a process performs.

Various functional operations described herein may be implemented in logic that is referred to using a noun or noun phrase reflecting said operation or function. For example, an association operation may be carried out by an "associator" or "correlator". Likewise, switching may be carried out by a "switch", selection by a "selector", and so on. "Logic" refers to machine memory circuits and non-transitory machine readable media comprising machine-executable instructions (software and firmware), and/or circuitry (hardware) which by way of its material and/or material-energy configuration comprises control and/or procedural signals, and/or settings and values (such as resistance, impedance, capacitance, inductance, current/voltage ratings, etc.), that may be applied to influence the operation of a device. Magnetic media, electronic circuits, electrical and optical memory (both volatile and nonvolatile), and firmware are examples of logic. Logic specifically excludes pure signals or software per se (however does not exclude machine memories comprising software and thereby forming configurations of matter).

Within this disclosure, different entities (which may variously be referred to as "units," "circuits," other components, etc.) may be described or claimed as "configured" to perform one or more tasks or operations. This formulation-[entity] configured to [perform one or more tasks]-is used herein to refer to structure (i.e., something physical, such as an electronic circuit). More specifically, this formulation is used to indicate that this structure is arranged to perform the one or more tasks during operation. A structure can be said to be "configured to" perform some task even if the structure is not currently being operated. A "credit distribution circuit configured to distribute credits to a plurality of processor cores" is intended to cover, for example, an integrated circuit that has circuitry that performs this function during operation, even if the integrated circuit in question is not currently being used (e.g., a power supply is not connected to it). Thus, an entity described or recited as "configured to" perform some task refers to something physical, such as a device, circuit, memory storing program instructions executable to implement the task, etc. This phrase is not used herein to refer to something intangible.

The term "configured to" is not intended to mean "configurable to." An unprogrammed FPGA, for example, would not be considered to be "configured to" perform some specific function, although it may be "configurable to" perform that function after programming.

As used herein, the term "based on" is used to describe one or more factors that affect a determination. This term does not foreclose the possibility that additional factors may affect the determination. That is, a determination may be solely based on specified factors or based on the specified factors as well as other, unspecified factors. Consider the phrase "determine A based on B." This phrase specifies that B is a factor that is used to determine A or that affects the determination of A. This phrase does not foreclose that the determination of A may also be based on some other factor, such as C. This phrase is also intended to cover an embodiment in which A is determined based solely on B. As used herein, the phrase "based on" is synonymous with the phrase "based at least in part on."

As used herein, the phrase "in response to" describes one or more factors that trigger an effect. This phrase does not foreclose the possibility that additional factors may affect or otherwise trigger the effect. That is, an effect may be solely in response to those factors, or may be in response to the specified factors as well as other, unspecified factors. Consider the phrase "perform A in response to B." This phrase specifies that B is a factor that triggers the performance of A. This phrase does not foreclose that performing A may also be in response to some other factor, such as C. This phrase is also intended to cover an embodiment in which A is performed solely in response to B.

As used herein, the terms "first," "second," etc. are used as labels for nouns that they precede, and do not imply any type of ordering (e.g., spatial, temporal, logical, etc.), unless stated otherwise. For example, in a register file having eight registers, the terms "first register" and "second register" can be used to refer to any two of the eight registers, and not, for example, just logical registers 0 and 1.

When used in the claims, the term "or" is used as an inclusive or and not as an exclusive or. For example, the phrase "at least one of x, y, or z" means any one of x, y, and z, as well as any combination thereof.

As used herein, a recitation of "and/or" with respect to two or more elements should be interpreted to mean only one element, or a combination of elements. For example, "element A, element B, and/or element C" may include only element A, only element B, only element C, element A and element B, element A and element C, element B and element C, or elements A, B, and C. In addition, "at least one of element A or element B" may include at least one of element A, at least one of element B, or at least one of element A and at least one of element B. Further, "at least one of element A and element B" may include at least one of element A, at least one of element B, or at least one of element A and at least one of element B.

## Claims

1. A current control system disposable in at least one area where a plurality of cables are present, the system comprising:

   one or more sensors configured to obtain a measured temperature for a first one of the plurality of cables;
   logic to generate a heat transfer model between individual cables of the plurality of cables; and
   logic to apply the measured temperature to the heat transfer model to control a current in a second one of the plurality of cables.

2. The current control system of claim 1, wherein the heat transfer model is a frequency domain model.

3. The current control system of claim 2, wherein the frequency domain model is based on a heating response to current excitations by one or both of the first one of the plurality of cables and the second one of the plurality of cables.

4. The current control system of claim 3, wherein the frequency domain model is based on the heating response to a square of current excitations.

5. The current control system of claim 1, further comprising:

   logic to obtain over time a plurality of current values from the first one of the plurality of cables and from the second one of the plurality of cables;
   logic to obtain over time from the one or more sensors a plurality of temperature values corresponding to the current values; and
   logic to determine from the current values and the temperature values the heat transfer model for a power load of each of the plurality of cables to itself and also to other of the plurality of cables in the bundle.

6. The current control system of claim 1, wherein the heat transfer model is dependent on a position along a length of one or both of the first one of the plurality of cables and the second one of the plurality of cables.

7. The current control system of claim 1, further comprising:
   logic to generate a heat transfer model between the plurality of cables and a duct enclosing at least a portion of the plurality of cables.

8. The current control system of claim 1, further comprising:
   logic to apply a load prioritization to control the current in the plurality of cables.

9. The current control system of claim 8, further comprising:
   logic to apply the measured temperature to the heat transfer model to control, based on the load prioritization, a current in the first one of the plurality of cables and the current in the second one of the the plurality of cables.

10. A method for controlling cable heating in an area where a plurality of cables are present, the method comprising:

   operating one or more sensors to obtain a measured temperature for a first one of the plurality of cables;
   generating a heat transfer model between individual cables of the plurality of cables; and
   applying the measured temperature to the heat transfer model to control a current in a second one of the plurality of cables.

11. The method of claim 10, wherein the heat transfer model is a frequency domain model.

12. The method of claim 11, wherein the frequency domain model is based on a heating response to current excitations by one or both of the first one of the plurality of cables and the second one of the plurality of cables.

13. The method of claim 12, wherein the frequency domain model is based on the heating response to a square of current excitations.

14. The method of claim 10, further comprising:

obtaining over time a plurality of current values from the first one of the plurality of cables and from the second one of the plurality of cables;
obtaining over time from the one or more sensors a plurality of temperature values corresponding to the current values; and
determining from the current values and the temperature values the heat transfer model for a power load of each cable of the plurality of cables to itself and also to other of the plurality of cables in the bundle.

15. The method of claim 10, wherein the heat transfer model is dependent on a position along a length of one or both of the first one of the plurality of cables and the second one of the plurality of cables.

**Patentansprüche**

1. Stromsteuersystem, das in mindestens einem Bereich angeordnet werden kann, in dem eine Vielzahl von Kabeln vorhanden ist, wobei das System umfasst:

einen oder mehrere Sensoren, die dazu konfiguriert sind, eine gemessene Temperatur für ein erstes Kabel der Vielzahl von Kabeln zu erhalten;
Logik zur Erzeugung eines Wärmeübertragungsmodells zwischen einzelnen Kabeln der Vielzahl von Kabeln; und
Logik, um die gemessene Temperatur auf das Wärmeübertragungsmodell anzuwenden, um einen Strom in einem zweiten Kabel aus der Vielzahl von Kabeln zu steuern.

2. Stromsteuersystem nach Anspruch 1, wobei das Wärmeübertragungsmodell ein Frequenzbereichsmodell ist.

3. Stromsteuersystem nach Anspruch 2, wobei das Frequenzbereichsmodell auf einer Heizreaktion auf Stromerregungen durch eines oder beide von dem ersten Kabel aus der Vielzahl von Kabeln und dem zweiten Kabel aus der Vielzahl von Kabeln basiert.

4. Stromsteuersystem nach Anspruch 3, wobei das Frequenzbereichsmodell auf der Heizreaktion auf ein Quadrat von Stromanregungen basiert.

5. Stromsteuersystem nach Anspruch 1, ferner umfassend:

Logik, um über die Zeit eine Vielzahl von Stromwerten von dem ersten Kabel aus der Vielzahl von Kabeln und von dem zweiten Kabel aus der Vielzahl von Kabeln zu erhalten;
Logik, um über die Zeit von dem einen oder den mehreren Sensoren eine Vielzahl von Temperaturwerten zu erhalten, die den Stromwerten entsprechen; und
Logik, um aus den Stromwerten und den Temperaturwerten das Wärmeübertragungsmodell für eine Leistungsbelastung jedes Kabels aus der Vielzahl von Kabeln zu sich selbst und auch zu anderen Kabeln aus der Vielzahl von Kabeln in dem Bündel zu bestimmen.

6. Stromsteuersystem nach Anspruch 1, wobei das Wärmeübertragungsmodell von einer Position entlang einer eine Länge eines oder beider von dem ersten Kabel aus der Vielzahl von Kabeln und dem zweiten Kabel aus der Vielzahl von Kabeln abhängig ist.

7. Stromsteuersystem nach Anspruch 1, ferner umfassend:
Logik zur Erzeugung eines Wärmeübertragungsmodells zwischen der Vielzahl von Kabeln und einem Kanal, der mindestens einen Abschnitt der Vielzahl von Kabeln umschließt.

**8.** Stromsteuersystem nach Anspruch 1, ferner umfassend:
Logik zur Anwendung einer Belastungspriorisierung zur Steuerung des Stroms in der Vielzahl von Kabeln.

**9.** Stromsteuersystem nach Anspruch 8, ferner umfassend:
Logik, um die gemessene Temperatur auf das Wärmeübertragungsmodell anzuwenden, um auf Grundlage der Belastungspriorisierung einen Strom in dem ersten Kabel aus der Vielzahl von Kabeln und den Strom in dem zweiten Kabel aus der Vielzahl von Kabeln zu steuern.

**10.** Verfahren zum Steuern der Kabelheizung in einem Bereich, in dem eine Vielzahl von Kabeln vorhanden sind, wobei das Verfahren Folgendes umfasst:

Betreiben eines oder mehrerer Sensoren, um eine gemessene Temperatur für ein erstes Kabel aus der Vielzahl von Kabeln zu erhalten;
Erzeugen eines Wärmeübertragungsmodells zwischen einzelnen Kabeln der Vielzahl von Kabeln; und
Anwenden der gemessenen Temperatur auf das Wärmeübertragungsmodell, um einen Strom in einem zweiten Kabel aus der Vielzahl von Kabeln zu steuern.

**11.** Verfahren nach Anspruch 10, wobei das Wärmeübertragungsmodell ein Frequenzbereichsmodell ist.

**12.** Verfahren nach Anspruch 11, wobei das Frequenzbereichsmodell auf einer Heizreaktion auf Stromerregungen durch eines oder beide von dem ersten Kabel aus der Vielzahl von Kabeln und dem zweiten Kabel aus der Vielzahl von Kabeln basiert.

**13.** Verfahren nach Anspruch 12, wobei das Frequenzbereichsmodell auf der Heizreaktion auf ein Quadrat von Stromanregungen basiert.

**14.** Verfahren nach Anspruch 10, ferner umfassend:

Erhalten einer Vielzahl von Stromwerten über die Zeit von dem ersten Kabel aus der Vielzahl von Kabeln und von dem zweiten Kabel aus der Vielzahl von Kabeln zu erhalten;
Erhalten von dem einen oder den mehreren Sensoren über die Zeit eine Vielzahl von Temperaturwerten, die den Stromwerten entsprechen; und
Bestimmen des Wärmeübertragungsmodells für eine Leistungsbelastung jedes Kabels aus der Vielzahl von Kabeln zu sich selbst und auch zu anderen Kabeln aus der Vielzahl von Kabeln in dem Bündel aus den Stromwerten und den Temperaturwerten.

**15.** Verfahren nach Anspruch 10, wobei das Wärmeübertragungsmodell von einer Position entlang einer eine Länge eines oder beider von dem ersten Kabel aus der Vielzahl von Kabeln und dem zweiten Kabel aus der Vielzahl von Kabeln abhängig ist.

**Revendications**

**1.** Système de contrôle de courant utilisable dans au moins une zone où plusieurs câbles sont présents, le système comprenant :

un ou plusieurs capteurs configurés pour obtenir une température mesurée pour un premier câble de la pluralité de câbles ;
une logique pour générer un modèle de transfert de chaleur entre des câbles individuels de la pluralité de câbles ; et
une logique pour appliquer la température mesurée au modèle de transfert de chaleur afin de contrôler un courant dans un second câble parmi la pluralité de câbles.

**2.** Système de contrôle de courant selon la revendication 1, dans lequel le modèle de transfert de chaleur est un modèle de domaine fréquentiel.

**3.** Système de contrôle de courant selon la revendication 2, dans lequel le modèle de domaine fréquentiel est basé sur une réponse d'échauffement à des excitations de courant par l'un ou les deux parmi le premier câble de la pluralité de câbles et le second câble de la pluralité de câbles.

**4.** Système de contrôle de courant selon la revendication 3, dans lequel le modèle de domaine fréquentiel est basé sur la réponse d'échauffement à un carré d'excitations de courant.

**5.** Système de contrôle de courant selon la revendication 1, comprenant en outre :

une logique pour obtenir, au fil du temps, une pluralité de valeurs de courant provenant du premier câble de la pluralité de câbles et du second câble de la pluralité de câbles ;
une logique pour obtenir, au fil du temps à partir des un ou plusieurs capteurs, une pluralité de valeurs de température correspondant aux valeurs actuelles ; et
une logique pour déterminer, à partir des valeurs de courant et des valeurs de température, le modèle de transfert de chaleur pour une charge de puissance de chacun des câbles de la pluralité de câbles par rapport à lui-même et également à d'autres câbles de la pluralité de câbles dans le faisceau.

**6.** Système de contrôle de courant selon la revendication 1, dans lequel le modèle de transfert de chaleur dépend d'une position suivant une longueur de l'un ou des deux parmi le premier câble de la pluralité de câbles et le second câble de la pluralité de câbles.

**7.** Système de contrôle de courant selon la revendication 1, comprenant en outre :
une logique pour générer un modèle de transfert de chaleur entre la pluralité de câbles et un conduit renfermant au moins une partie de la pluralité de câbles.

**8.** Système de contrôle de courant selon la revendication 1, comprenant en outre :
une logique pour appliquer une priorisation de charge pour contrôler le courant dans la pluralité de câbles.

**9.** Système de contrôle de courant selon la revendication 8, comprenant en outre :
une logique pour appliquer la température mesurée au modèle de transfert de chaleur afin de contrôler, sur la base de la priorisation de charge, un courant dans le premier câble de la pluralité de câbles et le courant dans le second câble de la pluralité de câbles.

**10.** Procédé de contrôle d'échauffement de câbles dans une zone où une pluralité de câbles sont présents, le procédé comprenant :

le fonctionnement d'un ou plusieurs capteurs afin d'obtenir une température mesurée pour un premier câble de la pluralité de câbles ;
la génération d'un modèle de transfert de chaleur entre des câbles individuels de la pluralité de câbles ; et
l'application de la température mesurée au modèle de transfert de chaleur pour contrôler un courant dans un second câble de la pluralité de câbles.

**11.** Procédé selon la revendication 10, dans lequel le modèle de transfert de chaleur est un modèle de domaine fréquentiel.

**12.** Procédé selon la revendication 11, dans lequel le modèle de domaine fréquentiel est basé sur une réponse d'échauffement à des excitations de courant par l'un ou les deux parmi le premier câble de la pluralité de câbles et le second câble de la pluralité de câbles.

**13.** Procédé selon la revendication 12, dans lequel le modèle de domaine fréquentiel est basé sur la réponse d'échauffement à un carré d'excitations de courant.

**14.** Procédé selon la revendication 10, comprenant en outre :

l'obtention, au fil du temps, d'une pluralité de valeurs de courant provenant du premier câble de la pluralité de câbles et du second câble de la pluralité de câbles ;
l'obtention, au fil du temps à partir des un ou plusieurs capteurs, d'une pluralité de valeurs de température correspondant aux valeurs actuelles ; et

la détermination, à partir des valeurs de courant et des valeurs de température, du modèle de transfert de chaleur pour une charge de puissance de chaque câble de la pluralité de câbles par rapport à lui-même et également à d'autres câbles de la pluralité de câbles dans le faisceau.

15. Procédé selon la revendication 10, dans lequel le modèle de transfert de chaleur dépend d'une position suivant une longueur de l'un ou des deux parmi le premier câble de la pluralité de câbles et le second câble de la pluralité de câbles.

FIG. 1

FIG. 2

FIG. 3

FIG. 4

**FIG. 5**

**FIG. 6**

**FIG. 7**

EP 4 172 581 B1

FIG. 8

FIG. 9

FIRST TEMPERATURE
MEASUREMENT
LOGIC 1006

FIRST CURRENT
SOURCE 1002

FIRST CURRENT
SINK 1010

FIRST
CABLE

SECOND
CABLE

SECOND CURRENT
SOURCE 1004

SECOND CURRENT
SINK 1012

TEMPERATURE
MEASUREMENT AND
CONTROL LOGIC
1008

**FIG. 10**

FIRST
CABLE

FIRST CURRENT
SOURCE 1002

FIRST CURRENT
SINK 1010

SECOND
CABLE

SECOND CURRENT
SOURCE 1004

SECOND CURRENT
SINK 1012

TEMPERATURE
MEASUREMENT
AND CONTROL
LOGIC 1008

**FIG. 11**

PRIORITY

FIG. 12

FIG. 13

ESTIMATE TRANSFER FUNCTIONS
1402

SOLVE SET OF MATRIX EQUATIONS
1404

UPDATE MATRIX ELEMENTS 1406 ◄———————— POWER PROFILE

◄———————— TEMPERATURE PROFILE

UPDATE TIME DOMAIN RESPONSES
1408 ————————► TRANSFER FUNCTION

UPDATE FREQUENCY DOMAIN
RESPONSES 1410

Y

MORE POWER
PROFILES? 1412

N

DONE

**FIG. 14**

APPLY TOP PRIORITY CABLE
CURRENTS 1502

REDUCE CURRENTS IN CABLES
WITH LESS THAN HIGHEST
PRIORITY 1508

APPLY TRANSFER FUNCTIONS TO
SIMULATE EXPECTED CABLE
TEMPERATURE PROFILES 1504

N

TEMPERATURES IN
RANGE? 1506

Y

ADD HIGHEST VALUE CABLE
CURRENT AVAILABLE 1510

APPLY TRANSFER FUNCTIONS TO
SIMULATE EXPECTED CABLE
TEMPERATURE PROFILES 1512

Y

TEMPERATURES IN
RANGE? 1514

N

OUTPUT DETERMINED CURRENTS
1516

**FIG. 15**

FIG. 16

**FIG. 17**

**FIG. 18**

FIG. 19

FIG. 20

INITIALIZE CABLE TEMPERATURE
2102

COMPUTE FFT OF CABLE
EXCITATION INCLUDING SQUARE OF
CABLE CURRENT AND
TEMPERATURE DEPENDENCE OF
CABLE RESISTIVITY  2104

COMPUTE SPECTRUM OF THE
EXPECTED CABLE TEMPERATURES
USING RESPONSE MODELS 2106

TRANSLATE CABLE TEMPERATURES
BACK TO TIME DOMAIN WITH IFFT
OF CABLE TEMPERATURE SPECTRA
2108

N

HAVE CABLE
TEMPERATURES
STABILIZED? 2110

Y

DONE

**FIG. 21**

INITIALIZE CABLE TEMPERATURES 2202

COMPUTE FFT OF CABLE EXCITATION INCLUDING SQUARE OF CABLE CURRENT AND TEMPERATURE DEPENDENCE OF CABLE RESISTIVITY 2204

COMPUTE TEMPERATURE SPECTRA OF MONITORED CABLES 2206

DETERMINE CABLE EXCITATION RESPONSE FUNCTIONS 2208

ESTIMATE UNKNOWN CABLE RESPONSE FUNCTIONS 2210

COMPUTE CABLE TEMPERATURE RESPONSE SPECTRUMS 2212

TRANSLATE CABLE TEMPERATURE RESPONSES BACK INTO TIME DOMAIN USING IFFT 2214

TEMPERATURES STABILIZED? 2216

N

Y

DONE

**FIG. 22**

**FIG. 23**

INITIALIZE CABLE TEMPERATURE RESPONSE MODELS 2402

COMPUTE FFT OF CABLE EXCITATION INCLUDING SQUARE OF CABLE CURRENT AND TEMPERATURE DEPENDENCE OF CABLE RESISTIVITY INCLUDING ITERATION FOR NON-LINEAR RESPONSE 2404

ADJUST RESPONSE MODELS 2412

COMPUTE SPECTRUM OF EXPECTED CABLE AND/OR DUCT TEMPERATURES USING RESPONSE MODELS 2406

CORRELATE EXPECTED TEMPERATURE SPECTRA TO SPECTRA OF AVAILABLE MEASURED TEMPERATURES 2408

Y

CORRELATION IMPROVEMENT POSSIBLE? 2410

N

RESPONSE MODELS DONE

FIG. 24

FIG. 25

2600

PROCESSORS 2604

PROCESSOR

INSTRUCTIONS
2602

○
○
○

PROCESSOR 2614

INSTRUCTIONS
2602

MEMORY 2606

MAIN MEMORY

INSTRUCTIONS
2602

STATIC

INSTRUCTIONS
2602

STORAGE UNIT 2620

MACHINE-READABLE

INSTRUCTIONS 2602

BUS 2610

I/O COMPONENTS 2608

OUPUT 2624

VISUAL

ACOUSTIC

HAPTIC

INPUT 2626

ALPHANUMERIC

POINT BASED

TACTILE

AUDIO | CAMERA

BIOMETRIC

EXPRESSION

BIOSIGNALS

IDENTIFICATION

MOTION 2630

ACCELERATION

GRAVITATION

ROTATION

ENVIRONMENT

ILLUMINATION

ACOUSTIC

TEMPERATURE

PRESSURE

POSITION

LOCATION

ALTITUDE

ORIENTATION

COMMUNICATION 2636

WIRED

NEAR FIELD

WIRELESS

BLUETOOTH

CELLULAR

WI-FI

2644

DEVICES
2640

2642

NETWORK
2638

**FIG. 26**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010053542 A2